# EUROPÄISCHE PATENTSCHRIFT

(11) **EP 0 823 018 B1**
(45) Veröffentlichungstag und Bekanntmachung des Hinweises auf die Patenterteilung: **22.03.2000**
(21) Anmeldenummer: 96912032.8
(22) Anmeldetag: 23.04.1996
(51) Int. Cl.: F02M 51/04, F02M 63/06, F02B 17/00, F02M 45/06

(54) **KRAFTSTOFF-EINSPRITZVORRICHTUNG FÜR BRENNKRAFTMASCHINEN**
FUEL INJECTION DEVICE FOR INTERNAL COMBUSTION ENGINES
INJECTEUR DE CARBURANT POUR MOTEURS A COMBUSTION INTERNE

(30) Priorität: 28.04.1995 DE 19515774; 28.04.1995 DE 19515781
(43) Veröffentlichungstag der Anmeldung: 11.02.1998
(73) Patentinhaber: Ficht GmbH & Co. KG, 85614 Kirchseeon (DE)
(72) Erfinder: HEIMBERG, Wolfgang, D-85560 Ebersberg (DE)
(74) Vertreter: Solf, Alexander, Dr.
(86) Internationale Anmeldenummer: EP9601695
(87) Internationale Veröffentlichungsnummer: WO9634195

(56) Entgegenhaltungen:
- DE-C- 415 182
- FR-A- 2 452 608
- US-A- 5 351 893

## Beschreibung

Die Erfindung betrifft eine nach dem Festkörper-Energiespeicher-Prinzip arbeitende Kraftstoff-Einspritzvorrichtung insbesondere für Zweitaktmotoren gemäß dem Oberbegriff des Anspruchs 1.

Derartige Kraftstoff-Einspritzvorrichtungen werden in der EP 0 629 265, insbesondere anhand der Fig. 13 bis 19 beschrieben. Sie arbeiten nach dem sogenannten Pumpe-Düse-System mit Druckstoß-Einspritzung, wobei ein anfänglicher beschleunigter Teilhub eines als Förderkolben wirkenden, einseitig axial geführten Ankers einer elektromagnetisch angetriebenen Einspritzpumpe vorgesehen ist, bei dem im Pumpensystem eine Verdrängung von gefördertem Kraftstoff ohne Druckaufbau in der Kraftstoff-Flüssigkeit erfolgt. Während dieses anfänglichen Teilhubs nimmt der Förderkolben bzw. der Anker kinetische Energie auf und speichert sie, wobei dem dabei verdrängten Kraftstoff ein vorbestimmter Fließraum zur Verfügung steht, der durch einen Kraftstoffkreislauf im Pumpensystem gewährleistet ist. Durch eine plötzliche vorbestimmte, mittels einer im Anker bzw. im Förderkolben angeordneten, durch die Ankerbewegung betätigten Ventileinrichtung bewirkte Unterbrechung des Kraftstoffkreislaufs während des widerstandsfreien Vorhubes des Förderkolbens und aufgrund der nachfolgenden Bewegung des Förderkolbens gibt der Förderkolben seine gespeicherte kinetische Energie druckstoß- bzw. schlagartig an die Kraftstoffteilmenge ab, die sich in einem durch die Kreislaufunterbrechung gebildeten bzw. abgetrennten geschlossenen Raumbereich des Kreislaufraumes - dem sogenannten Druckraum - zwischen dem Förderkolben bzw. im Förderkolben und einer z.B. federbelastet verschlossenen Einspritzdüse befindet. Der schlagartige Druckaufbau im Kraftstoff auf z.B. 60 bar bewirkt eine Öffnung der Einspritzdüse und eine Einspritzung von Kraftstoff durch die Einspritzdüse in einen Brennraum einer Brennkraftmaschine während einer extrem kurzen Zeit von z.B. einer 1.000stel Sekunde.

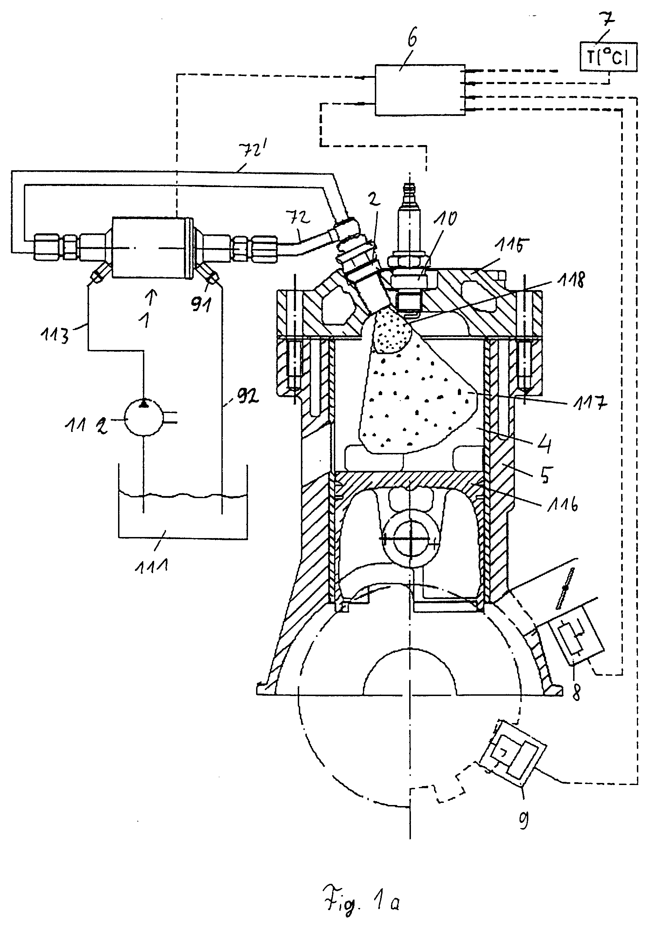

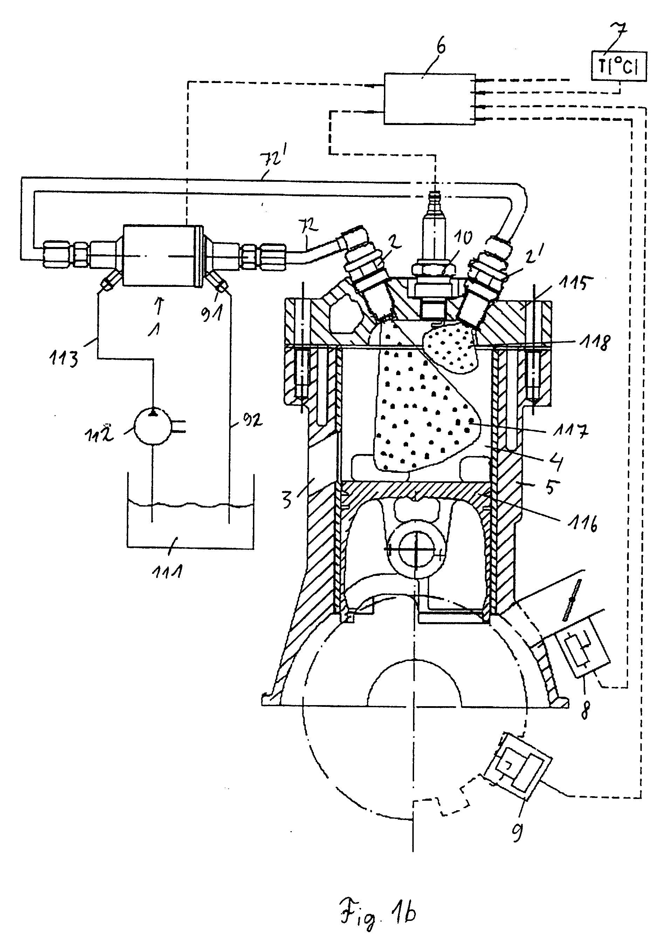

Diese aus der EP 0 629 265 bekannten Pumpe-Düse-Systeme umfassen eine elektromagnetisch angetriebene Hubkolbenpumpe 1 und die Einspritzdüse 2 (Fig. 1a). Diese Pumpe-Düse-Systeme haben sich insbesondere bei Zweitaktmotoren bewährt, bei denen vordem bekanntlich durch Spülverluste große Schadstoffmengen ausgepufft wurden und ein hoher Kraftstoffverbrauch entstand, indem ein hoher Kraftstoffanteil unverbraucht den Auslaßkanal 3 passieren konnte, weil bei Zweitaktmotoren Überström- und Auslaßkanal 3 gleichzeitig geöffnet sind. Mit den oben beschriebenen Pumpe-Düse-Systemen konnte der Kraftstoffverbrauch und der Schadstoffausstoß nunmehr drastisch reduziert werden. Zudem konnte die vordem auf unregelmäßiger Zündung bei niedrigen Drehzahlen beruhende Laufunruhe des Motors nahezu vollkommen verhindert werden. Dabei wird der Kraftstoff extrem kurzzeitig und direkt in den Brennraum 4 eines Zylinders 5 gespritzt, und zwar erst dann, wenn der Auslaßkanal 3 weitestgehend geschlossen ist. Die Steuerung 6 zur Optimierung des Pumpe-Düse-Systems erfolgt elektronisch über z.B. einen Mikroprozessor, der den Einspritzzeitpunkt und die Kraftstoffmenge steuert, wobei dafür z.B. mit einem Temperaturfühler 7, einem Drosselklappen-Potentiometer 8 und einem Kurbelwinkelsensor 9 der Einspritzzeitpunkt lastabhängig ermittelt wird. Der Mikroprozessor steuert zweckmäßigerweise auch die Zündanlage 10 der mit dem Pumpe-Düse-System mit Kraftstoff beschickten Kolbenzylindereinheit des Motors.

Durch diese Pumpe-Düse-Systeme wird die Kohlenwasserstoff-Emission im Vergleich zu anderen Zweitaktmotoren drastisch vermindert, wobei zugleich die Laufkultur, insbesondere bei niedrigen Drehzahlen, deutlich verbessert wird. Auch Kohlenmonoxid und das zur Schmierung zugeführte Öl werden in deutlich geringeren Mengen ausgestoßen, so daß ein solcher Zweitaktmotor bezüglich der Abgaswerte mit einem Viertaktmotor vergleichbar ist, aber dennoch die zweitakttypische hohe Leistung bei geringem Gewicht aufweist.

Bei den oben beschriebenen Pumpe-Düse-Systemen wird der Kraftstoff-Kreislaufraum von einer Druckkammer und einem Förderkolben- bzw. Ankerraum gebildet, wobei die Druckkammer der durch ein Standdruckventil vom Druckraum abgetrennte Teilraumbereich ist, in dem auf den Kraftstoff die kinetische Energie des Ankers übertragen wird und wobei der Ankerraum der Teilraumbereich ist, in den der widerstandslos verdrängte Kraftstoff während des beschleunigten Teilhubs einfließen kann.

Der Ankerraum kann nach den bekannten Pumpe-Düse-Systemen über eine Gehäusebohrung mit einer Kraftstoffflutung- bzw. -spüleinrichtung in Verbindung stehen, so daß Kraftstoff während der Einspritzaktivität des Ankers und/oder während der Startphase der Pumpe bzw. des Motors durch diesen Teilraumbereich befördert werden kann. Durch diese Flutung bzw. Spülung mit z.B. kühlem und blasenfreiem Kraftstoff werden im Ankerraum befindlicher blasenhaltiger Kraftstoff entfernt, der Ankerraum sowie dessen Umgebung gekühlt und Blasenbildung infolge von Wärmeeinwirkung und/oder Kavitation weitgehend unterdrückt.

Unter besonderen Bedingungen, insbesondere bei Einwirkung von Wärme auf den Kraftstoff, die im Pumpe-Düse-System während des Betriebes, z.B. durch die elektrische Energie und/oder Ankerreibung oder dergleichen, entstehen kann, können Blasen in den Druckraum gelangen. Dies kann die Funktion des Pumpe-Düse-Systems und insbesondere den Einspritzvorgang beeinträchtigen.

Aus der FR-A-2 452 608 (= DE 29 12 633 A1) ist eine Brennstoffeinspritzeinrichtung für Brennkraftmaschinen bekannt, die einen elektromagnetisch betätigten Schwenkanker aufweist, der mit zwei Kolben verbunden ist, die jeweils in einer Pumpenkammer verschieblich gelagert sind. Diese Pumpenkammern sind jeweils in einer Stichleitung zu einer Kraftstoff-Förderleitung angeordnet, wobei stromabwärts von der Pumpenkammer in der Stichleitung ein Einlaßventil und stromaufwärts jeweils ein Auslaßventil vorgesehen ist, so daß durch die Hin- und Herbewegung der Kolben Kraftstoff in der Förderleitung intermittierend gepumpt wird.

Diese Brennstoffeinspritzvorrichtung weist somit zwei von einem gemeinsamen Schwenkanker betätigte Kraftstoffpumpen auf, wobei sowohl beim Vor- als auch beim Zurückschwenken des Schwenkankers in einer der beiden Einspritzpumpen jeweils Kraftstoff gefördert wird.

Bei der Kraftstoffdirekteinspritzung bei Dieselmotoren ist es bekannt, den Einspritzvorgang so zu gestalten, daß zunächst eine erste Kraftstoffmenge eingespritzt wird und nach Ablauf eines Zündverzuges eine zweite Hauptkraftstoffmenge eingespritzt wird, so daß der Dieselschlag bzw. die Klopfgeräusche des Dieselmotors wesentlich verringert werden.

In diesem Zusammenhang sind grundsätzlich zwei Verfahrensweisen bekannt, nämlich die Stufeneinspritzung und die Doppeleinspritzung. Doppeleinspritzung kann mit zwei Pumpenelementen oder mit einem sehr schnell arbeitenden Pumpenelement zur zweimaligen Einspritzung realisiert werden. Der dazu notwendige konstruktive Aufwand ließ bisher jedoch eine praktische Anwendung scheitern, zumal man davon ausging, daß damit nur das Klopfen des Motors, nicht aber sein Kraftstoffverbrauch verringert wird.

Aus diesem Grund wurde die Stufeneinspritzung verwirklicht, die mittels eines Voreinspritzventils realisiert wird, das zwei Düsenbohrungen aufweist, die sich bei verschiedenen Drücken öffnen. Hierdurch wird der Einspritzvorgang in einen Vorstrahl und einen Hauptstrahl aufgeteilt.

Ferner ist es bekannt, mittels einer Doppeleinspritzung eine sogenannte Ladungsschichtung des Kraftstoffes im Brennraum eines Motors auszuführen.

Bei Ladungsschichtung in einem Ottomotor wird Kraftstoff so in einen Brennraum des Motors eingebracht, daß eine Kraftstoffhauptmenge ein mageres Kraftstoff/Luft-Gemisch (z. B. λ = 1,5 bis 3,0) bildet und im Bereich einer Zündkerze ein fettes Kraftstoff/Luft-Gemisch (z. B. λ = 0,85 bis 1,3) angereichert wird. Dieses fette Kraftstoff/Luft-Gemisch wird durch die Zündkerze gezündet, wobei dann auch das magere, an sich nicht zündfähige Kraftstoff/Luft-Gemisch mit einem hohen Luftüberschuß abbrennt. Durch den Luftüberschuß werden sehr günstige Abgaswerte erhalten.

In MTZ Motortechnische Zeitschrift, 35. Jahrgang, Nr. 10, Oktober 1974, S. 307 bis 313 sind zwei Möglichkeiten zur Erzeugung einer Ladungsschichtung angegeben. Eine Ausführungsmöglichkeit eines Schichtlademotors besteht in der direkten Einspritzung des Kraftstoffes in einen ungeteilten Brennraum, wobei die Schichtung durch eine gerichtete Drallbewegung der Luft erzeugt wird. Hierdurch wird das Gemisch in Zündkerzennähe angereichert und bleibt noch zündfähig, auch wenn es insgesamt sehr mager ist.

Entscheidenden Einfluß auf die Funktionstüchtigkeit dieses Systems haben Einspritzdruck und Einspritzrichtung des Kraftstoffes, die Lagezuordnung zwischen Zündkerze und einer Einspritzdüse und vor allem die Strömungsgeschwindigkeit der Luft. Da die Intensität des Luftdralles der Motordrehzahl proportional ist, ergeben sich Schwierigkeiten beim Betrieb in einem großen Drehzahl- und Lastbereich, wie er für Fahrzeugmotoren typisch und erforderlich ist.

Eine Ladungsschichtung kann auch durch einen geteilten Brennraum realisiert werden, also mit Hilfe einer Nebenkammer. In diesem Fall wird in einen Zylinder ein mageres Gemisch angesaugt, während die Anreicherung in der Nebenkammer mittels einer Einspritzdüse oder eines zusätzlichen Einlaßsystems erfolgt. Diese Ausführungen sind grundsätzlich von Drehzahl- und Laständerungen unabhängig und daher für Fahrzeugmotoren gut geeignet.

Ein solcher Schichtlademotor mit Nebenkammern ist auch in MTZ Motortechnische Zeitschrift, 34. Jahrgang, Nr. 4, April 1973, S. 130, 131 beschrieben. Dieser Schichtlademotor ist der sogenannte CVCC-Motor von Honda, der in einem kleinen Personenwagen eingebaut wird und minimale Abgaswerte bezüglich CO, CH und NOₓ erreicht. Nachteilig an diesem Motor ist, daß auf Grund der Nebenkammern der Wirkungsgrad abnimmt und der Kraftstoffverbrauch um etwa 10 % gegenüber herkömmlichen Ottomotoren ohne Nebenkammern steigt.

Der Erfindung liegt die Aufgabe zugrunde, eine einfache Einspritzvorrichtung zu schaffen, die eine Schadstoffverringerung, Kraftstoffeinsparung ermöglicht und unabhängig von Gemischtoleranzen ist.

Die Aufgabe wird durch eine Mehrfach-Einspritzvorrichtung mit den Merkmalen des Anspruchs 1 gelöst. Die erfindungsgemäße Einspritzvorrichtung arbeitet nach dem Festkörper-Energiespeicher-Prinzip, wodurch große Kraftstoffmengen während kurzer Zeitintervalle injiziert werden können und ist doppelt wirkend ausgebildet, wobei die erfindungsgemäße Einspritzvorrichtung eine Hin- und Herbewegung bzw. eine Stoß- und Rückstoßbewegung eines Förderkolbenelementes während eines Arbeitstaktes sowohl für eine Voreinspritzung durch die Stoßbewegung als auch für eine Nacheinspritzung durch die Rückstoßbewegung ausnutzt. Hierdurch vereinfacht sich der Aufbau der Einspritzvorrichtung im Vergleich zu zwei einzelnen Einspritzvorrichtungen wesentlich, insbesondere reduziert sich die Anzahl der Teile, vor allem wenn das Förderkolbenelement einteilig ausgebildet ist.

Mit der erfindungsgemäßen Einspritzvorrichtung wird somit auf einfache Art und Weise eine exakte und schnelle Doppeleinspritzung realisiert, so daß im Brennraum eine optimale Kraftstoff Verteilung und eine sichere Zündung bzw. Entflammung erzielt werden. Hierdurch wird der Schadstoffausstoß vermindert und Kraftstoff eingespart. Zudem kann der Motor mit unterschiedlichen Gemischqualitäten bezüglich des Verbrennungsluftverhältnisses (λ) betrieben werden, ohne daß die Zündung und die Verbrennungsqualität durch unterschiedliche Luftmengen beeinträchtigt werden. Unterschiedliche Luftmengen sind im Betrieb des Motors im Zylinder unvermeidbar.

Vorteilhafte Weiterbildungen der Erfindung sind in den Unteransprüchen gekennzeichnet.

Die Erfindung sieht demnach insbesondere eine Druckkammer, in der die im Anker bzw. im Förderkolbenelement gespeicherte Energie auf den Kraftstoff übertragen wird, vor, der das die widerstandslose Verdrängung unterbrechende Ventil außerhalb des Ankerraums, bzw. vom Ankerraum und Ankerbereich räumlich getrennt angeordnet ausgebildet ist. Hierdurch wird die im Ankerraum erzeugte Wärme nicht unmittelbar auf die Druckkammer übertragen, wodurch die Erwärmung des beim Einspritzvorgang komprimierten Kraftstoffs und damit die Gefahr einer Blasenbildung erheblich reduziert wird. Zudem ist die Druckkammer frei zugänglich, so daß sie zur weiteren Kühlung beispielsweise mit Kühlrippen und/oder direkt mit einer Kraftstoffzufuhrleitung versehen werden kann, so daß der Druckkammer blasenfreier, kühler Kraftstoff zugeführt werden kann. Ferner kann die Druckkammer kleinvolumiger ausgebildet sein, so daß sich weniger Kraftstoff in der Druckkammer befindet wodurch die Gefahr der Blasenbildung vermindert wird.

Außerdem brauchen auf Grund der kleinen Druckkammer bei direkter Kraftstoffzufuhr auch nur geringe Kraftstoffmengen umgespült zu werden.

Eine doppelte bzw. zweiseitige Axialführung des Ankers gemäß Anspruch 5 vermeidet Reibung bewirkende Kippbewegungen des Ankers, so daß eine Wärmeentwicklung unterdrückt werden kann.

Die Bildung von Gasblasen und deren funktionsbehindernde Wirkung und/oder die Erwärmung des Kraftstoffes werden nahezu ausgeschlossen.

Die erfindungsgemäße Kraftstoff-Einspritzvorrichtung ist bei Ladungsschichtung besonders vorteilhaft verwendbar. Sie arbeitet nach dem Festkörper-Energiespeicher-Prinzip, wonach hohe Abspritzdrücke über extrem zeitlich kurze Einspritzintervalle erzeugt werden können, und eine sich schnell wiederholende Betätigung auch bei extrem hohen Drehzahlen (größer 10 000 U/min) bei sehr genau dosierbarer, lastabhängiger Kraftstoffmenge möglich ist.

Anhand der Zeichnung wird die Erfindung im folgenden beispielhaft näher erläutert. Es zeigen:
- Fig. 1a und 1 b: schematisch die Anordnung einer Kraftstoff-Einspritzvorrichtung bei einem einzylindrigen Zweitaktmotor;
- Fig. 2: schematisch im Längsschnitt ein erstes Ausführungsbeispiel einer erfindungsgemäßen Einspritzpumpe;
- Fig. 3: im Querschnitt einen in Fig. 2 gezeigten Anker;
- Fig. 4: im Querschnitt einen in Fig. 2 gezeigten Ventilkörper;
- Fig. 5: schematisch im Längsschnitt ein zweites Ausführungsbeispiel einer erfindungsgemäßen Einspritzpumpe, und
- Fig. 6: schematisch einen zeitlichen Ablauf von Vor- und Nacheinspritzung bezüglich des Zündzeitpunktes.

Die erfindungsgemäße Kraftstoff-Einspritzvorrichtung für Brennkraftmaschinen ist als elektromagnetisch angetriebene, doppeltwirkende Hubkolbenpumpe 1 ausgebildet, die nach dem Energiespeicherprinzip arbeitet, so daß Kraftstoff mit kurzen Druckstößen in die Brennkraftmaschine eingespritzt wird.

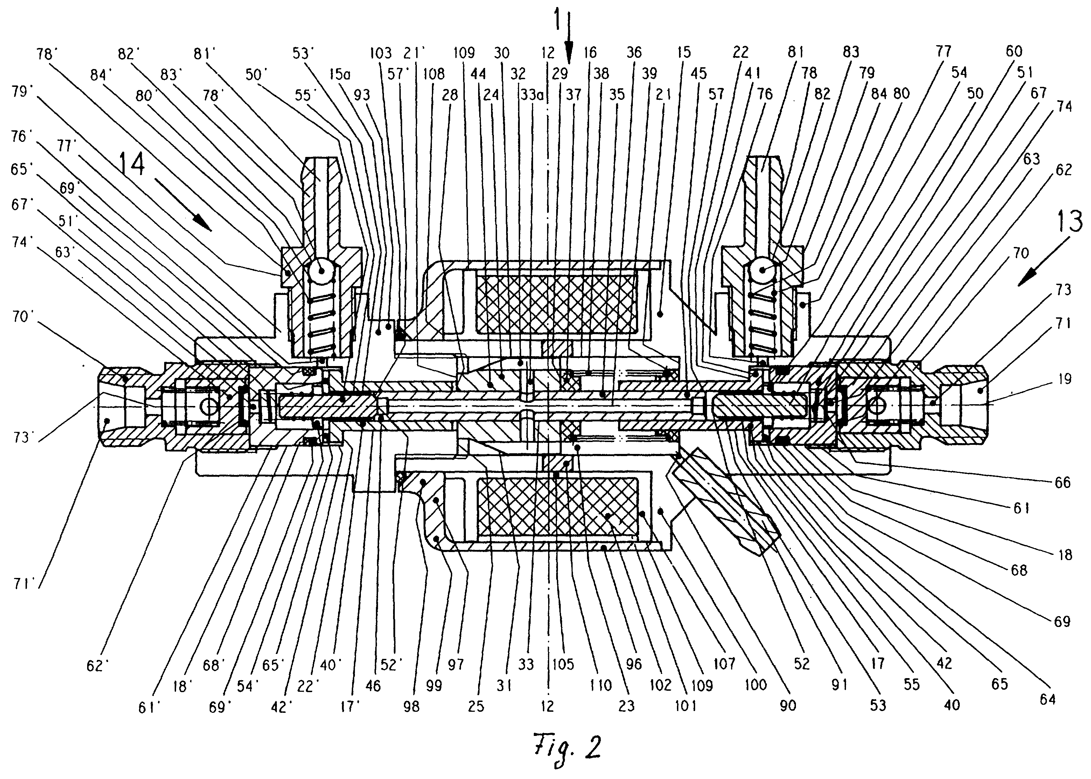

Ein erstes Ausführungsbeispiel der erfindungsgemäßen Hubkolbenpumpe 1 ist in den Fig. 2 bis 4 dargestellt.

Die Hubkolbenpumpe 1 weist ein im wesentlichen langgestrecktes zylinderförmiges zweiteiliges Pumpengehäuse mit einem ersten und zweiten Pumpengehäuseteil 15, 15a auf mit einer mittigen Ankerbohrung 16, zwei Ventilbohrung 17, 17' und zwei Druckkammerbohrungen 18, 18' die jeweils hintereinander im Pumpengehäuse 15, 15a eingebracht sind und einen sich durch das gesamte Pumpengehäuse 15, 15a erstreckenden Durchgang bilden.

Die Ankerbohrung 16 ist in Längsachsrichtung zwischen den Ventilbohrungen 17, 17' und den Druckkammerbohrungen 18, 18' angeordnet. Die Bohrungen 16, 17, 17', 18, 18' sind konzentrisch zur Längsachse 19 des Pumpengehäuses 15, 15a angeordnet, wobei die Ankerbohrung 16 und die Druckkammerbohrung 18, 18' jeweils einen größeren Innendurchmesser als die Ventilbohrungen 17, 17' aufweisen, so daß die Ankerbohrung 16 und die Ventilbohrungen 17, 17' durch erste Ringstufen 21, 21' und die Ventilbohrungen 17, 17' und die Druckkammerbohrungen 18, 18' durch zweite Ringstufe 22, 22' voneinander abgesetzt sind.

Eine Richtung parallel zur Längsachse 19, die von dem zweiten Pumpengehäuseteil 15a in Richtung zum ersten Pumpengehäuseteil 15 gerichtet ist, wird als Druckstoßrichtung 27 definiert.

Die Bohrungen 16, 17, 17', 18, 18' sind etwa spiegelsymmetrisch zu einer Quermittenebene 12 der Hubkolbenpumpe 1 angeordnet, wobei die in Druckstoßrichtung 27 vor (in Fig. 2 rechts von der Ebene 12) der Ebene 12 angeordneten Bauteile eine erste Förderpumpe 13 und die in Druckstoßrichtung 27 hinter (in Fig. 2 links von der Ebene 12) der Quermittenebene 12 angeordneten Bauteile eine zweite Förderpumpe 14 bilden.

Gleiche Bauteile der z. B. als Vorförderpumpe dienende erste Förderpumpe 13 und der z. B. als Nachförderpumpe dienende Förderpumpe 14 werden mit den gleichen Bezugszeichen gekennzeichnet, wobei die Bezugszeichen der Nachförderpumpe 14 mit einem Beistrich (') versehen sind, weil die Bauteile im wesentlichen gleiche Raumformen aufweisen. Als axiale Richtungsangabe wird für die nachfolgende Beschreibung in den Bohrungen 16, 17, 17', 18 und 18' "nach innen" als in Richtung zur Ebene 12 und " nach außen" als von der Quermittenebene 12 weggerichtet festgelegt.

Die Ankerbohrung 16 begrenzt in Radialrichtung einen Ankerraum 23, in dem ein etwa zylinderförmiger Anker 24 in Längsachsrichtung hin- und herbeweglich angeordnet ist. Der Ankerraum ist axial in Richtung zur Vorförderpumpe 13 durch eine erste Ringstufe 21 und in Richtung zur Nachförderpumpe 14 durch eine erste Ringstufe 21' begrenzt, wobei letztere eine Stirn- bzw. Anschlagfläche 25 des zweiten Gehäuseteils 15a ausgebildet ist. Das zweite Gehäuseteil 15a ist in ein axial offenes Ende der Ankerbohrung 16 des ersten Gehäuseteils 15 mit einem zylinderförmigen Gewindeabschnitt 26 eingeschraubt.

Der Anker 24 ist aus einem im wesentlichen zylinderförmigen Körper mit einer in Stoßrichtung 27 bezüglich der ersten Förderpumpe 13 vorderen und hinteren Stirnfläche 28, 29 und einer Mantelfläche 30 ausgebildet. Von der hinteren Stirnfläche 28 bis etwa zur Längsmitte des Ankers 24 erweitert sich der Radius stetig, so daß der Anker 24 dort konisch ausgebildet ist und eine von hinten nach vorne verlaufende Kegelfläche 31 hat. Der Anker 24 ist mit Spiel zwischen seiner Mantelfläche 30 und der Innenfläche der Ankerbohrung 16 eingesetzt, so daß bei einer Hin- und Herbewegung des Ankers 24 in der Ankerbohrung 16 dieser die Innenfläche der Ankerbohrung 16 nur bei Verkippungen berührt, wodurch die Reibung zwischen dem Anker 24 und der Ankerbohrung 16 gering gehalten wird. Durch das Vorsehen des konischen Bereichs 31 am Anker 24 wird die Berührungs- und damit die Reibfläche weiter vermindert, wodurch die Reibmöglichkeit zwischen dem Anker 24 und der Innenfläche der Ankerbohrung 16 und somit auch die Wärmeentwicklung weiter verringert wird. Der Anker 24 ist im Bereich seiner Mantelfläche 30 mit zumindest einer, vorzugsweise zwei oder mehreren in Längsachsrichtung verlaufenden Nuten 32 versehen.

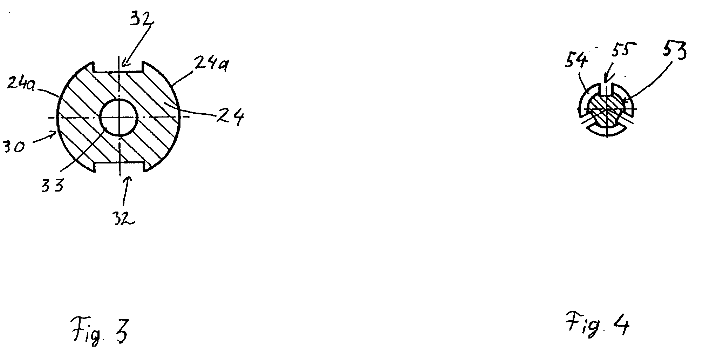

Der Anker 24 weist zwei im Querschnitt betrachtet etwa halbkreisförmige (Fig. 3), diametral sich gegenüberliegend angeordnete Segmente 24a zwischen denen flache Nuten 32 angeordnet sind. Zentral im Anker 24 ist in Längsachsrichtung eine durchgehende Bohrung 33 eingebracht.

Die Bohrung 33 des Ankers 24 wird von einem Förderkolbenrohr 35 durchsetzt, das einen zentralen Druchgangsraum 36 bildet, wobei es den Anker 24 beidseitig überragt.

Das Förderkolbenrohr 35 ist kraftschlüssig mit dem Anker 24 verbunden. Die Einheit aus Förderkolbenrohr 35 und Anker 24 wird nachfolgend auch als Förderkolbenelement 44 bezeichnet. Das Förderkolbenelement 44 kann auch einteilig bzw. einstückig ausgebildet sein.

Der Anker 24 und das Förderkolbenrohr 35 weisen zwei senkrecht zur Längsachse 19 verlaufende Bohrungen 33a auf, die im Anker 24 eine Verbindung zwischen dem Durchgangsraum 36 und den Nuten 32 bzw. dem Ankerraum 23 herstellen.

An der in Druckstoßrichtung 27 vorderen bzw. in Richtung zur Vorförderpumpe 13 angeordneten Stirnringfläche 29 des Ankers 24 sitzt ein erster Stützring 37 aus Kunststoff, der vom Förderkolbenrohr 35 formschlüssig durchgriffen wird. Auf dem Stützring 37 stützt sich nach vorne eine Ankerfeder 38 ab, die sich bis zu einem entsprechenden korrespondierenden zweiten Stützring 39 aus Kunststoff erstreckt. Dieser Ring 39 sitzt auf der ersten Ringstufe 21 in der Ankerbohrung 16.

In den Ventilbohrungen 17, 17' sitzt form- und kraftschlüssig jeweils ein Führungsrohr 40, 40', wobei sich das Führungsrohr 40 der Vorförderpumpe 13 nach hinten in den Ankerraum 23 in den Bereich innerhalb der Ankerfeder 38 erstreckt und das Führungsrohr 40' der Nachförderpumpe 14 in der Ventilbohrung 17' kurz vor der Stirnringfläche 25 des hinteren Gehäuseteils 15a endet und nicht in den Ankerraum 23 ragt. An den axial äußeren Enden der Führungsrohre 40, 40' ist jeweils ein radial nach außen vorstehender Ringsteg 41, 41' vorgesehen, der sich an der jeweils zweiten Ringstufe 22, 22' in Richtung nach innen abstützt. Die Ringstege 41, 41' erstrecken sich radial nicht bis an die Innenfläche der Druckkammerbohrungen 18, 18', so daß zwischen den Ringstegen 41, 41' und den Druckkammerbohrungen 18, 18' jeweils ein schmaler, zylinderringförmiger Spalt 42, 42' verbleibt. Durch die Ringstege 41, 41' sind die Führungsrohre 40, 40' gegen eine axiale Verschiebung nach innen gesichert.

Das mit dem Anker 24 kraftschlüssig verbundene Förderkolbenrohr 35 erstreckt sich beidseitig axial nach außen bis in die beiden Führungsrohre 40, 40', so daß das Förderkolbenrohr 35 sowohl an seinem vorderen Ende 45 als auch an seinem hinteren Ende 46 geführt wird. Durch diese zweiseitige Führung an den Enden 45, 46 des langgestreckten Förderkolbenrohres 35 wird das Förderkolbenelement 44 verkippfrei geführt, so daß Reibungen zwischen dem Anker 24 und der Innenfläche der Ankerbohrung 16 weitgehend vermieden werden.

In dem axial außen liegenden Bereich der Führungsrohre 40, 40' ist jeweils ein Ventilkörper 50, 50' axial verschiebbar gelagert, der jeweils einen im wesentlichen zylinderförmigen, langgestreckten, zapfenförmigen Vollkörper mit einer äußeren und inneren Stirnfläche 51, 51', 52, 52' und einer Mantelfläche 53, 53' bildet. Der Außendurchmesser der Ventilkörper 50, 50' entspricht jeweils der lichten Weite des Durchgangs in den Führungsrohren 40, 40'. An den Mantelflächen 53, 53' der Ventilkörpers 50, 50' ist jeweils ein Ringsteg 54, 54' vorgesehen, der etwa am Ende des äußeren Drittels der Ventilkörpers 50, 50' angeordnet ist. Die Ringstege 41, 41' der Führungsrohre 40, 40' bilden für die Ringstege 54, 54' der Ventilkörper 50, 50' ein Widerlager, so daß diese nicht weiter nach innen verschoben werden können. Die Ventilkörper 50, 50' sind an ihrem Umfang mit jeweils drei in Längsachsrichtung verlaufenden flachen, breiten Nuten 55, 55' versehen (Fig. 4). Die Ringstege 54, 54' sind im Bereich der Nuten 55, 55' jeweils unterbrochen. Die Anzahl, Anordnung oder Form der Nuten 55, 55' kann auch in anderer Art und Weise ausgeführt werden.

Die inneren Stirnflächen 52, 52' der Ventilkörper 50, 50' sind an ihrem Randbereich konisch ausgebildet und wirken als Ventilsitz mit den Stirnflächen der Enden 45, 46 des Förderkolbens 35 zusammen. Die Raumformen der Enden 45, 46 des Förderkolbenrohres 35 sind als Ventilsitz an die inneren Stirnflächen 52, 52' der Ventilkörper 50, 50' angepaßt, indem jeweils die Innenkante des Förderkolbenrohres 35 angefast ist und die Wandung des Förderkolbenrohres 35 innen etwas abgetragen ist. Das Förderkolbenrohr 35 bildet somit mit seinen Enden 45, 46 jeweils einen Ventilsitz 57, 57' für die Ventilkörper 50, 50'. Liegen die Ventilkörper 50, 50' mit ihren inneren Stirnflächen 52, 52' an den Ventilsitzen 57, 57' an, so ist jeweils der Durchgang durch das Rohr 35 und die im Bereich der Mantelflächen der Ventilkörper 50, 50' eingebrachten Nuten 55, 55' versperrt.

Die aus den Führungsrohren 40, 40' nach vorne in die Druckkammerbohrungen 18, 18' vorstehenden Bereiche der Ventilkörper 50, 50' sind jeweils von einem Druckkammerkörper 60, 60' umgeben, die jeweils aus einer Zylinderwandung 61, 61' und einer äußeren Stirnwandung 62, 62' bestehen, wobei in die Stirnwandungen 62, 62' zentral jeweils ein Loch bzw. eine Bohrung 63, 63' eingebracht ist. Die Druckkammerkörper 60, 60' stecken mit ihren zylinderförmigen Wandungen 61, 61' form- und kraftschlüssig in den Druckkammerbohrungen 18, 18', wobei sie mit ihren an den freien Enden der Zylinderwandungen 61, 61' liegenden Stirnflächen 64, 64' an den nach außen vorstehenden Ringstegen 41, 41' der Führungsrohre 40, 40' anliegen. Die Druckkammerkörper 60, 60' weisen an ihren Stirnflächen 64, 64' eine vertikal verlaufende Nut 65, 65' auf.

Die Druckkammerkörper 60, 60' begrenzen mit ihren Innenräumen jeweils eine Druckkammer 66, 66', in die die Ventilkörper 50, 50' eintauchen und den in den Druckkammern 66, 66' befindlichen Kraftstoff unter Druck setzen können. Die Druckkammern 66, 66' haben an ihrem inneren Bereich, der sich etwa über die Hälfte der Länge des Druckkammerkörpers 60 bzw. 60' erstreckt, eine größere lichte Weite als im äußeren Bereich. Die größere lichte Weite im inneren Bereich ist so bemessen, daß die Ventilkörper 50, 50' mit ihren Ringstegen 54, 54' und einem geringen Spiel in die Druckkammern 66, 66' eintauchen können, wohingegen die lichte Weite des vorderen Bereiches so bemessen ist, daß nur für die von den Ringstegen 54, 54' sich nach vorne erstreckenden Bereiche des Ventilkörpers 50 und jeweils eine diese Bereiche umgebenden Schraubenfeder 67, 67' ausreichend Raum ist. Hierdurch sind die Druckkammern 66, 66' nur geringfügig größer ausgebildet, als der beim Einspritzvorgang ausgeführten Stoßbewegung der Ventilkörper 50, 50' beanspruchte Raum.

Die Schraubenfedern 67, 67' sitzen mit ihren Enden innen auf den Stirnwandungen 62, 62' der Druckkammerkörper 60, 60' und liegen mit ihren anderen Enden an den Ventilkörpern 50, 50' und insbesondere an dessen Ringstegen 54, 54' an, so daß sie die Ventilkörper 50, 50' und die Druckkammerkörper 60, 60' auseinanderdrücken.

Die Druckkammerkörper 60, 60' sind nach außen bzw. in Einspritzrichtung nach vorne durch jeweils ein Anschlußstück 70, 70' axial fixiert, die in die nach außen offenen Enden der Druckkammerbohrungen 18, 18' geschraubt sind. Die Anschlußstücke 70, 70' begrenzen die Lage der Druckkammerkörper 60, 60' axial nach außen, so daß durch die Schraubenfedern 67, 67' und die Druckkammerkörper 60, 60' die Ventilkörper 50, 50' nach innen vorgespannt sind. Außenseitig sind die Anschlußstücke mit jeweils einer Mündung 71, 71' zum Anschließen einer Kraftstofförderleitung 72, 72' (Fig. 1a, 1b) ausgebildet. Die Ansschlußstücke 70, 70' weisen eine in Längsachsrichtung durchgehende Bohrung 73, 73' auf, in der jeweils ein Standdruckventil 74, 74' untergebracht ist. Die Standdruckventile 74, 74' sind vorzugsweise angrenzend zu dem Druckkammerkörper 60, 60' angeordnet, so daß sich die Druckkammern 66, 66' nach außen nicht weiter erstrecken und kleinvolumig ausgebildet sind.

Die Kraftstofförderleitungen 72, 72' können sowohl an einem gemeinsamen Einspritzventil 2 (Fig. 1a), als auch jeweils an einem Einspritzventil 2, 2' angeschlossen sein (Fig. 1b). Das Einspritzventil 2' für die Nachförderung ist vorzugsweise so ausgebildet, daß es den Kraftstoff feiner als das Einspritzventil 2 für die Vorförderung zerstäubt, so daß es eine Kraftstoffwolke aus sehr fein verteilten Kraftstofftröpfchen, vorzugsweise in der Nähe der Zündkerze 10, einspritzt.

Die Druckkammerkörper 60, 60' sind an ihren Außenflächen mit einer Ringnut 68, 68' versehen, in der jeweils ein Kunststoffdichtring 69, 69', lagert, der die Druckkammerkörper 60, 60' gegenüber den Innenflächen der Druckkammerbohrungen 18, 18' abdichtet.

Für die Zufuhr von Kraftstoff ist an den beiden Pumpengehäuseteilen 15, 15a jeweils eine Kraftstoffzufuhr-Öffnung 76, 76' im Bereich der Druckkammerbohrungen 18, 18' eingebracht, so daß sie in die Nuten 65, 65' der Druckkammerkörper 60, 60' münden. Außenseitig in den Pumpengehäuseteilen 15, 15' sind die Kraftstoffzufuhr-Öffnungen 76, 76' jeweils von einer Fassung 77, 77' für jeweils ein Kraftstoffzufuhr-Ventil 78, 78' umgeben, die in die Fassung 77, 77' geschraubt ist. Die Kraftstoffzufuhr-Ventile 78, 78' sind als Einwegventile mit einem Ventilgehäuse 79, 79' ausgebildet. Die Ventilgehäuse 79, 79' weisen jeweils zwei axial fluchtende Bohrungen 80, 81 bzw. 80', 81' auf, wobei die pumpengehäuseseitigen Bohrungen 80, 80' einen größeren Innendurchmesser als die Bohrungen 81, 81' haben, so daß zwischen den beiden Bohrungen eine Ringstufe ausgebildet ist, die jeweils einen Ventilsitz 82, 82' für Kugeln 83, 83' bilden. Die Kugeln 83, 83' sind jeweils durch eine Feder 84, 84', die sich an der Gehäusewandung der Gehäuseteile 15, 15a im Bereich der Kraftstoffzufuhr-Öffnungen 76, 76' abstützten, gegen die Ventilsitze 82, 82' vorgespannt, so daß unter Druck von außen zugeführte Kraftstoff die Kugeln 83, 83' von den Ventilsitzen 82, 82' heben kann und Kraftstoff durch die Bohrungen 80, 80', die Kraftstoffzufuhr-Öffungen 76, 76' und die Nuten 65, 65' in die Druckkammerbohrungen 18, 18' bzw. in die Druckkammern 66, 66' gelangt.

Von den Druckkammern 66, 66' erstreckt sich durch die Nuten 55, 55' der Ventilkörper 50, 50', zwischen den Ventilsitzen 57, 57' des Förderkolbenrohres 35 und den inneren Stirnflächen 52, 52' der Ventilkörper 50, 50', wenn diese auf Abstand angeordnet sind, durch den Durchgangsraum 36 des Förderkolbenrohres 35 und den Bohrungen 33a im Hubkolbenelement 44 ein Durchgang bis in den Ankerraum 23.

Am Peripheriebereich der auf der Seite der Vorförderpumpe 13 angeordneten ersten Ringstufe 21 ist eine nach außen führende Bohrung 90 als Kraftstoff-Ablauföffnung eingebracht. Die Bohrung 90 wird außen durch einen Anschlußstutzen 91 zum Anschluß einer Kraftstoff-Rücklaufleitung 92 (Fig. 1) verlängert.

Das zweite Pumpengehäuseteil 15a weist angrenzend an den zylinderförmigen Gewindeabschnitt 26 eine umlaufende radial nach außen vorstehende Ringstufe 93 auf. Die Ringstufe 93 dient unter anderem auch zur axialen Fixierung eines das erste Pumpengehäuseteil 15 außen umgreifenden Spulengehäusezylinders 95. Der Spulengehäusezylinder 95 besteht aus einer ersten, breiten Zylinderwandung 96 und aus einer zweiten, schmalen Zylinderwandung 97 mit kleinerem Innendurchmesser als die erste Zylinderwandung 96, die miteinander über einen sich radial erstreckenden Ringsteg 98 einstückig verbunden sind. Der Spulengehäusezylinder 95 wird mit seiner ersten Zylinderwandung 96 nach vorne zeigend auf das erste Gehäuseteil 15 aufgeschoben, bis die erste Zylinderwandung 96 an einer vom ersten Pumpengehäuseteil 15 nach außen vorstehenden Gehäusewandung 100 anstößt und so eine Ringkammer 101 mit etwa rechteckigem Querschnitt zur Aufnahme einer Spule 102 begrenzt.

Der Spulengehäusezylinder 95 ist somit zwischen der Gehäusewandung 100 und der Ringstufe 93 des zweiten Gehäuseteils 15' eingeklemmt und in ihrer Axiallage fixiert. Die zweite Zylinderwandung 97 des Spulengehäusezylinders 95 ist am inneren Rand ihrer zur Nachförderpumpe 14 zeigenden Stirnfläche angefast, wobei zwischen der darin ausgebildeten Fase, dem ersten Gehäuseteil 15 und der Ringstufe 93 ein Dichtungsring 103, wie z. B. ein O-Ring, eingeklemmt ist.

Die Spule 102 ist im Querschnitt etwa rechteckförmig und in einem im Querschnitt U-förmigen Tragkörperzylinder 104 mittels Epoxidharz eingegossen, so daß die Spule 102 und der Tragkörperzylinder 104 ein einteiliges Spulenmodul bilden. Der Tragkörperzylinder 104 hat eine Zylinderwandung 105 und zwei Seitenwandungen 106, 107, die radial nach außen von der Zylinderwandung 105 abstehen und den Raum für die Spule 102 begrenzen, wobei sich die Zylinderwandung 105 seitlich über die hintere Seitenwandung 106 hinaus erstreckt, so daß deren Stirnfläche 108, die Stirnflächen 109 der Seitenwandungen 106, 107 und die Innenflächen der Zylinderwandung 106 und die vordere Seitenwandung 107 formschlüssig in der Ringkammer 101 anliegen.

In dem Bereich des ersten Pumpengehäuseteils 15, der zwischen der Spule 102 und dem Ankerraum 23 angeordnet ist, ist ein Material mit geringer magnetischer Leitfähigkeit 110, z. B. Kupfer, Aluminium, rostfreier Stahl, zur Vermeidung eines magnetischen Kurzschlusses zwischen der Spule 102 und dem Anker 24 eingebracht.

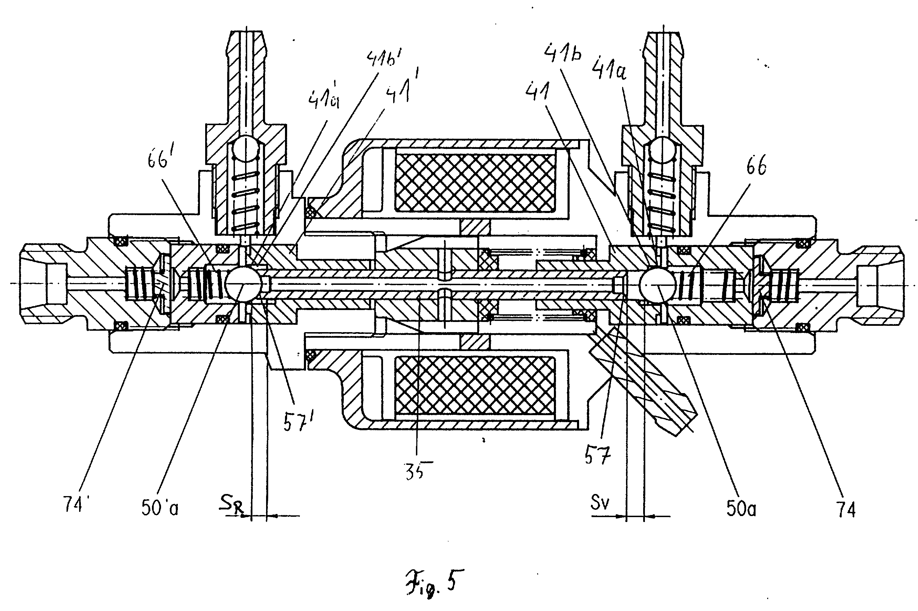

Ein zweites Ausführungsbeispiel der erfindungsgemäßen Einspritzpumpe ist in Fig. 5 dargestellt.

Die Hubkolbenpumpe 1 gemäß dem zweiten Ausführungsbeispiel hat im wesentlichen den gleichen Aufbau wie die oben beschriebene Hubkolbenpumpe 1, so daß Teile mit gleicher Raumform und gleicher Funktion mit denselben Bezugszeichen gekennzeichnet sind.

Die Hubkolbenpumpe gemäß dem zweiten Ausführungsbeispiel ist in seiner Längserstreckung kürzer ausgebildet als die Hubkolbenpumpe gemäß dem ersten Ausführungsbeispiel, wobei die Verkürzung im wesentlichen durch die Verwendung von Kugeln 50a, 50a' als Ventilkörper erzielt wird. Die Ringstege 41, 41' der Führungsrohre 40, 40' bilden für die Kugeln 50a, 50a' ein Widerlager, so daß diese nicht weiter nach innen verschoben werden können, wobei die Ringstege 41, 41' jeweils mit einem an die Kugelform angepaßten ringförmigen Kugelsitz 41a, 41a' ausgebildet sind, so daß die Kugeln 50a, 50a' bereichsweise formschlüssig an den Ringstegen 41, 41' anliegen können.

Die Kugeln 50a, 50a' weisen eine glatte Oberfläche auf, weshalb in die Kugelsitze 41a, 41a' Nuten 41b, 41b' eingebracht sind, die die Druckkammern 66, 66' mit dem Spalt zwischen den Ventilsitzen 57, 57' des Förderkolbenrohres 35 und den Oberflächen der Kugeln 50a, 50a' verbinden, wenn diese auf Abstand zu den Ventilsitzen 57, 57' angeordnet sind. Durch das Vorsehen der Nuten 41b, 41b' wird die Spülung durch das Förderkolbenrohr 35 ermöglicht.

Nachfolgend wird die Funktionsweise der erfindungsgemäßen Einspritzvorrichtung anhand des ersten Ausführungsbeispiels der Erfindung erläutert.

Ist der Stromfluß durch die Spule 102 unterbrochen, so wird der Anker 24 durch die Ankerfeder 38 nach hinten gegen die Stirn- bzw. Anschlagfläche 25 des zweiten Gehäuseteils 15a gedrückt, an welcher der Anker 34 mit seiner rückseitigen Stirnfläche 49 anliegt. Das ist die Ausgangsstellung des Ankers 24, bei der das Förderkolbenrohr 35 mit seinem in Richtung zur Vorförderpumpe 13 zeigenden Ventilsitz 57 von der hinteren Stirnfläche 52 des Ventilkörpers 50 mit einem Abstand sᵥ beabstandet angeordnet ist. In dieser Ausgangsstellung beaufschlagt das Förderkolbenrohr 35 mit dem Ventilsitz 57' den Ventilkörper 50' der Nachförderpumpe 14 gegen die Federwirkung der Schraubenfeder 67', so daß der Ringsteg 54' des Ventilkörpers 50' mit einem Abstand s_{R} vom Ringsteg 41' des Führungsrohres 40' beabstandet ist.

In dieser Ausgangsstellung wird vom Kraftstofftank 111 mittels einer Kraftstoffpumpe 112 und einer Kraftstoffzufuhrleitung 113 ein unter einem Vordruck stehender Kraftstoff durch das Kraftstoffzufuhr-Ventil 78 in die Druckkammer 66 der Vorförderpumpe 13 zugeführt. Von der Druckkammer 66 strömt der Kraftstoff durch die im Mantelbereich des Ventilkörpers 50 eingebrachten Nuten 55 durch das Führungsrohr 40 in den Spalt zwischen dem Ventilsitz 57 des Förderkolbenrohres 35 und der inneren Stirnfläche 52 des Ventilkörpers 50 und in den Durchgangsraum 36 des Förderkolbens 35. Aus dem Durchgangsraum 36 des Förderkolbens 35 strömt der unter Druck stehende Kraftstoff durch die Bohrungen 33a durch das Förderkolbenrohr 35 und den Anker 24 hindurch und flutet den Ankerraum 23. Die Bereiche des Ankerraums 23 vor und hinter dem Anker 24 sind durch die im Anker 24 eingebrachten Nuten 32 miteinander kommunizierend verbunden, so daß der gesamte Ankerraum 23 mit Kraftstoff gefüllt wird. Durch die Bohrung 90 und den Anschlußstutzen 91 wird der Kraftstoff zurück in den Kraftstofftank 111 geleitet.

Somit besteht in der Ausgangsstellung des Förderkolbenelements 44 ein sich vom Kraftstoffzufuhr-Ventil 78 über die Druckkammer 66 der Vorförderpumpe 13, dem Durchgangsraum 36 des Förderkolbens 35, den Bohrungen 33a im Hubkolbenelement 44, dem Ankerraum 23, der Bohrung 90 und dem Anschlußstutzen 91 erstreckender Strömungsweg für den Kraftstoff, so daß Kraftstoff kontinuierlich zugeführt und durch den Strömungsweg hindurch gespült wird, wobei die Druckkammer 66 der Vorförderpumpe 13 immer mit frischem, kühlem und daher blasenfreien Kraftstoff direkt aus dem Kraftstofftank 111 versorgt und geflutet wird.

Der durch die Kraftstoffpumpe 112 erzeugte Vordruck ist einerseits größer als der im Strömungsweg entstehende Druckabfall, so daß eine kontinuierliche Spülung der Hubkolbenpumpe 1 gewährleistet ist, und ist andererseits kleiner als der Durchlaßdruck des Standdruckventils 74, so daß in der Ausgangsstellung des Förderkolbenelements 44 kein Kraftstoff von der Hubkolbenpumpe 1 zur Einspritzdüse 2 gefördert wird.

Wird die Spule 102 durch Anlegen eines elektrischen Stromes erregt, wird durch das hierbei erzeugte Magnetfeld der Anker 24 in Richtung zur Vorförderpumpe 13 bewegt und führt eine Bewegung aus, die den Ventilkörper 50 der Vorförderpumpe 13 für eine Voreinspritzung betätigt. Der Bewegung des Hubkolbenelements 44 (= Anker 24 und Förderkolbenrohr 35) wirkt während eines Vorhubes über die Länge sᵥ (entspricht dem Abstand zwischen dem Ventilsitz 57 des Förderkolbenrohres 35 und der inneren Stirnfläche 52 des Ventilkörpers 50 in der Ausgangsstellung) nur die Federkraft der Ankerfeder 38 entgegen. Die Federkraft der Ankerfeder 38 ist so weich ausgebildet, daß der Anker 24 nahezu ohne Widerstand bewegt wird, aber dennoch genügt die Federkraft, um den Anker 24 in seine Ausgangsstellung zurückzuführen. Der Anker 24 "schwimmt" in dem mit Kraftstoff gefüllten Druckraum 23, wobei der Kraftstoff zwischen den Bereichen vor und hinter dem Anker 24 im Ankerraum 23 beliebig hin- und herströmen kann, so daß kein dem Anker 24 entgegenstehender Druck aufgebaut wird. Das Förderkolbenelement 44, das aus dem Anker 24 und aus dem Förderkolbenrohr 35 besteht, wird somit kontinuierlich beschleunigt und speichert kinetische Energie.

Während der Stoßbewegung des Hubkolbenelements 44 in Richtung zur Vorförderpumpe 13 wird der Ventilkörper 50' der Nachförderpumpe 14 auf Grund der Federwirkung der Schraubenfeder 67' mit dem Hubkolbenelement 44 mitbewegt, bis sein Ringsteg 54' an dem Ringsteg 41' des Führungsrohres 40' anliegt. Hierbei wird das Volumen der Druckkammer 66' der Nachförderpumpe 14 vergrößert, so daß über das Kraftstoff-Zufuhr-Ventil 78' "frischer" bzw. blasenfreier Kraftstoff angesaugt wird. Nachdem das Hubkolbenelement 44 einen Vorhub über die Wegstrecke s_{R} (entspricht dem Abstand zwischen dem Ringsteg 59' des Ventilkörpers 50' vom Ringsteg 41' des Führungsrohres 40' in der Ausgangsstellung des Hubkolbenelements 44) ausgeführt hat, löst sich der Ventilsitz 57' von der inneren Stirnfläche 52' des Ventilkörpers 50', so daß sich zwischen der Stirnfläche 52' und dem Ventilsitz 57' ein Abstand ausbildet, der einen Durchgang von der Druckkammer 66', durch die Nuten 55' in den Durchgangsraum 36 des Förderkolbenrohres 35 bildet. Somit bildet sich während der Stoßbewegung des Hubkolbenelements 44 ein durchgehender Strömungsweg vom Kraftstoff-Zufuhr-Ventil 78' zum Ankerraum 23 bzw. der Bohrung 90.

Am Ende des Vorhubs sᵥ schlägt das Förderkolbenelement 44 mit dem Ventilsitz 57 auf die innere Stirnfläche 52 des Ventilkörpers 50 der Vorförderpumpe 13 auf, so daß dieser schlagartig nach außen gedrückt wird. Da das Förderkolbenrohr 35 mit seinem Ventilsitz 57 nun an der inneren Stirnfläche 52 des Ventilkörpers 50 anliegt, ist der Strömungsweg von der Druckkammer 66 der Vorförderpumpe 13 zu dem Durchgangsraum 36 des Förderkolbenrohres 35 unterbrochen, so daß der Kraftstoff aus der Druckkammer 66 nicht mehr nach hinten entweichen kann. Der Kraftstoff wird somit durch den Stoß und die weitere Vorschubbewegung des Ventilkörpers 50 aus der Druckkammer 66 verdrängt, wobei er unter Druck steht. Das Kraftstoffzufuhr-Ventil 78 ist hierbei geschlossen, da sich in der Druckkammer und in der Bohrung 80 des Kraftstoffzufuhr-Ventils 78 ein Druck aufbaut, der größer ist als der Druck, mit dem der Kraftstoff von der Kraftstoffpumpe zugeführt wird. Ab einem vorbestimmten Druck öffnet sich dann das Standdruckventil 74, so daß auf den in der Förderleitung zwischen der Einspritzdüse 2 und der Hubkolbenpumpe 1 befindlichen Kraftstoff ein vorbestimmter Druck ausgeübt wird, der beispielsweise bei 60 bar liegt und durch den Durchlaßdruck der Einspritzdüse 2 festgelegt ist. Mit dem Aufschlagen des Förderkolbenelements 44 wird somit die in der Bewegung des Förderkolbenelements 44 gespeicherte Energie schlagartig auf den in der Druckkammer 66 befindlichen Kraftstoff übertragen.

Die Zeitdauer, während dessen die Magnetspule 102 erregt und das Hubkolbenelement 44 bewegt wird, bestimmt den vom Ventilkörper 50 zurückgelegten Weg beim Verdrängen von Kraftstoff in der Druckkammer 66, wodurch der durch die Vorförderpumpe 13 geförderte Kraftstoff proportional zum zurückgelegten Weg des Ventilkörpers 50 bzw. proportional zum Zeitintervall, währenddessen die Magnetspule 102 unter Strom geschaltet wird, ist. Der maximale Förderweg kann ein Vielfaches des Abstandes s_{V} zwischen dem Ventilsitz 57 und der inneren Stirnfläche 52 des Ventilkörpers 50 in der Ausgangsstellung des Hubkolbenelements 44 betragen.

Die Kraftstofförderung der Vorförderpumpe 13 wird durch Stromlosschalten der Magnetspule 102 beendet, worauf das Hubkolbenelement 44 durch die Federwirkung der Ankerfeder 38 in seine Ausgangsstellung zurückbewegt wird und eine Rückstoßbewegung ausführt, um den Ventilkörper 50' der Nachförderpumpe 14 für eine Nacheinspritzung zu betätigen. Befindet sich der Anker 24 im Abstand s_{R} von der Anschlagfläche 25, so schlägt das Hubkolbenelement 44 mit seinem in Richtung zur Nachförderpumpe 14 zeigenden Ventilsitz 57' auf den Ventilkörper 50' auf und schiebt diesen in die Druckkammer 66', wobei Kraftstoff aus der Druckkammer 66' verdrängt wird. Der Anker 24 trifft auf die Anschlagfläche 25 auf, wodurch der Hub s_{R} der Nachförderpumpe 14 schlagartig abgebrochen wird und sich das Hubkolbenelement 44 wieder in seiner Ausgangsstellung befindet.

Die Rückstoßbewegung des Hubkolbenelements 44 kann auch zeitlich verzögert werden, indem nach Beendigung der Kraftstofförderung mit der Vorförderpumpe 13 die Magnetspule nicht stromlos geschaltet wird, sondern der Stromwert für ein vorbestimmtes Verzögerungszeitintervall auf ein Niveau abgesenkt wird, der das Hubkolbenelement 44 nicht mehr in Stoßrichtung 27 bewegt und seine Rückbewegung hemmt, so daß das Hubkolbenelement 44 mit einer zeitlichen Verzögerung auf den Ventilkörper 50' aufschlägt. Hierdurch kann der zeitliche Abstand zwischen der Kraftstofförderung der Vorförderpumpe 13 und der Kraftstofförderung der Nachförderpumpe 14 gesteuert werden.

Die vom Ventilkörper 50' zurückgelegte Wegstrecke s_{R} während des Einspritzvorganges der Nachförderpumpe 14 ist bei jedem Nachförderhub gleich lang, so daß mit der Nachförderpumpe 14 immer die gleiche Kraftstoffmenge pro Einspritzvorgang eingespritzt wird. Diese konstante Einspritzmenge wird vorzugsweise so gewählt, daß sie dem Kraftstoffbedarf des daran angeschlossenen Motors im Leerlaufbetrieb entspricht.

Der Hub sᵥ der Vorförderpumpe 13 ist vorzugsweise größer oder gleich dem Hub s_{R} der Nachförderpumpe (sᵥ ≥ s_{R}), so daß der vollständige Förderhub der Nachförderpumpe 14 ausgeführt werden kann, ohne daß eine Kraftstofförderung an der Vorförderpumpe 13 erfolgt.

Die erfindungsgemäße doppeltwirkende Hubkolbenpumpe 1 kann besonders vorteilhaft zur Ladungsschichtung in Ottomotoren angewandt werden, wobei Kraftstoff mit hohem Druck sehr kurzzeitig in den Brennraum 4 mit der Einspritzpumpe 1 eingespritzt wird (Fig. 1a). Der Brennraum 4 ist in an sich bekannter Weise durch den Zylinder 5, einen Zylinderkopf 115 und einen Kolben 116 begrenzt. Am Zylinderkopf 115 ist eine Zündkerze 10 und eine Einspritzdüse bzw. ein Einspritzventil 2 für eine direkte Einspritzung in den Brennraum 4 eingebracht. Das Einspritzventil 2 ist über die Kraftstofförderleitung 72, 72' mit der Einspritzpumpe 1 verbunden.

Der Einspritzpumpe 1 wird aus einem Kraftstofftank 111 über eine Kraftstoffpumpe 112 von einer Kraftstoffzufuhrleitung 113 ein gegebenenfalls unter Vordruck stehender Kraftstoff zugeführt. Die Einspritzpumpe 1 und die Zündkerze 10 werden von der Steuereinrichtung 6 gesteuert, die mit mehreren Sensoren zur Wahrnehmung des Motorzustandes verbunden ist, wie z.B dem Temperaturfühler 7, dem Drosselklappensensor 8 und dem Kurbelwinkelsensor 9.

Mit dem erfindungsgemäßen Verfahren wird zu einem frühen Zeitpunkt eine variable, d.h. mengenmäßig lastabhängige erste Kraftstoffmenge, die Kraftstoffhauptmenge, in den Brennraum 4 eingespritzt. Die Kraftstoffhauptmenge ist so dosiert, daß sich bei einer Vermischung z.B. einer Verwirbelung während eines Kolbenhubs mit einer angesaugten Luftmenge ein mageres ggfs. nicht zündfähiges Gemischverhältnis von λ ≥ 1,5 einstellt. Hierauf wird eine zweite Kraftstoffmenge, die Kraftstoffzündmenge, in den Brennraum 4 in den Bereich der Zündkerze 10 eingespritzt, die ein fetteres Gemischverhältnis, beispielsweise von λ = 0,85 bis 1,3, aufweist, das mit der Zündkerze 10 gezündet wird. Die Kraftstoffzündmenge wird vorzugsweise etwa konstant gehalten. Die daraus resultierende Flammenfront breitet sich im Kraftstoff/Luft-Gemisch relativ gleichmäßig aus, wobei aufgrund der voreingestellten bzw. vorgewählten Gemischverhältnisse ideale Abgaswerte erzielt werden.

Der Erfolg des erfindungsgemäßen Verfahrens beruht auf der Tatsache, daß große Kraftstoffmengen bei den verwendeten hohen Einspritzdrücken von beispielsweise über 40 bar eine Wolke z.B. in Form einer Keule 117 bildet, die von dem im Brennraum enthaltenen Gas nicht schon in der Nähe des Einspritzventils 10 abgebremst wird, sondern mit vorherbestimmbarer Verbreitung in den Brennraum dringt und sich dort verteilt. Kleinere zerstäubte Kraftstoffmengen werden aufgrund des hohen Drucks unmittelbar beim Eintritt in den Brennraum 4 in der Nähe des Einspritzventils 2 abgebremst. Wird diese Kraftstoffwolke 118 so plaziert, daß sie in den Funkenbereich der Zündkerze 10 reicht, kann sie gezündet werden. Insofern ist es zweckmäßig, das Einspritzventil 2 benachbart zur Zündkerze 10 anzuordnen in einer aufeinander-zugerichteten V-förmigen Stellung (Fig. 1a, 1b).

Mit dem erfindungsgemäßen Verfahren erreicht man somit auf überraschend einfache Art und Weise eine optimierbare Ladungsschichtung durch getrennte Einspritzung eines mageren Kraftstoff/Luft-Gemischs und eines fetten Kraftstoff/Luft-Gemischs in denselben Brennraum, ohne daß es notwendig ist, den Brennraum mit einer Nebenkammer für eine Einspritzung auszubilden. Die Direkteinspritzung führt zu einer wesentlichen Reduktion des Kraftstoffverbrauchs im Vergleich zu herkömmlichen Schichtlademotoren mit Nebenkammern.

Der von der Kraftstoffmenge abhängige Zerstäubungs- und Abbremseffekt, der wohl auf mengenabhängigen, sprunghaft sich ändernden Strömungsbedingungen beruht, bietet ferner den Vorteil, daß kleinere Kraftstoffhauptmengen mit ihrem Zentrum näher an der Zündkerze verbleiben als größere Kraftstoffhauptmengen, so daß eine gezielte Beeinflussung zwischen der fetteren Kraftstoffwolke 118 der eingespritzten Kraftstoffzündmenge und der mageren Kraftstoffkeule 117 der Kraftstoffhauptmenge möglich ist. Hierdurch ist das erfindungsgemäße Verfahren von drehzahl- und lastabhängigen unerwünschten Schwankungen unabhängig, weil das Vor- und Nacheinspritzen der Kraftstoffhauptmenge bzw. der Kraftstoffzündmenge sowohl bei kleineren als auch bei größeren Kraftstoffhauptmengen optimiert erfolgen kann.

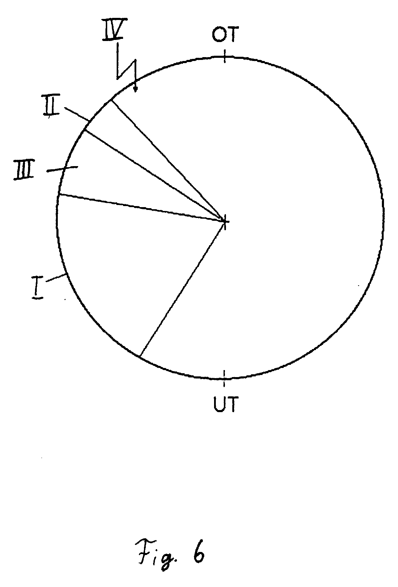

Zwischen dem früheren Zeitpunkt der Voreinspritzung I und dem späteren Zeitpunkt der Nacheinspritzung II steht ein relativ großer Zeitraum III zur Verfügung (Fig. 6), so daß sich eine große Kraftstoffhauptmenge im Brennraum 4 z.B. durch Verwirbeln mit der angesaugten Luft homogen verteilen kann. Das so erzeugte Kraftstoff/Luft-Gemisch ist seinerseits im Brennraum 4 sehr homogen verteilt. Da die Kraftstoffzündmenge, die bei hoher Last sehr viel geringer als die Kraftstoffhauptmenge ist, erst kurz vor oder gleichzeitig mit dem Zündzeitpunkt IV in den Bereich der Zündstelle der Zündkerze 10 eingespritzt wird, wird gezielt eine inhomogene Verteilung von Kraftstoff und Luft im Brennraum 4 herbeigeführt. Der Zeitraum zwischen der Voreinspritzung und der Nacheinspritzung entspricht zweckmäßigerweise einer Kurbelwellenwinkeldifferenz von etwa 40° bis 100° und liegt im Lastbereich des Ottomotors vorzugsweise bei über 60°.

Vorzugsweise wird der zeitliche Abstand zwischem dem früheren Zeitpunkt der Voreinspritzung und dem späteren Zeitpunkt der Nacheinspritzung proportional zur Kraftstoffhauptmenge gesteuert, so daß bei großer Kraftstoffhauptmenge eine homogene Verteilung letzterer sichergestellt ist und eine kleine Kraftstoffhauptmenge nicht schon so weitgehend diffundiert ist, daß sie derart abgemagert und von der durch die Kraftstoffzündmenge gebildeten Kraftstoffwolke 9b entfernt ist, daß sie nicht mehr abgebrannt werden kann. Die Hauptkraftstoffmenge kann variabel bzw. lastabhängig gesteuert werden, wobei im Leerlauf der Motor sogar nur mit der Kraftstoffzündmenge, also ohne Hauptkraftstoffmenge, betrieben werden kann. Bei hohen Lasten kann die Kraftstoffhauptmenge z.B. das 10 fache der Kraftstoffzündmenge betragen.

Ein typischer zeitlicher Verlauf von Voreinspritzung, Nacheinspritzung und Zündung für eine mittlere Last und eine mittlere Drehzahl ist in Fig. 6 in bezug zu einem Kurbelwellenumlauf dargestellt. Die Winkelbereiche für die Vor- und Nacheinspritzung sind in der oben angegegebenen Art und Weise von der Last und der Drehzahl abhängig, wobei insbesondere zu berücksichtigen ist, daß ein bestimmter Winkelbereich bei steigender Drehzahl einem kleineren bzw. abnehmenden Zeitintervall entspricht, so daß sich die Winkelbereiche für Nach- und Voreinspritzung mit steigender Drehzahl vergrößern. Ein typisches Verhältnis der Winkelbereiche bei mittlerer Last und mittlerer Drehzahl ist 1:2:4 für die Zeiträume der Nacheinspritzung : Zeitabstand zwischen Vor- und Nacheinspritzung : Voreinspritzung.

Der bei dem erfindungsgemäßen Verfahren angelegte Einspritzdruck z.B. des Druckstoßes ist größer oder gleich 40 bar und liegt vorzugsweise im Bereich um 60 bar. Bei einem Einspritzdruck von 60 bar wird mit herkömmlichen Einspritzdüsen eine Kraftstoffeinspritzgeschwindigkeit von etwa 50 m/s erzielt. Die hohen Einspritzgeschwindigkeiten sowie der hohe Einspritzdruck bewirken offenbar die von der Kraftstoffmenge abhängigen Zerstäubungs- und Abbremseffekte, die bei der erfindungsgemäß verwendeten Doppeleinspritzung zu der optimalen Ladungsschichtung führt.

## Patentansprüche

1. Kraftstoff-Einspritzvorrichtung, die nach dem Festkörper-Energiespeicher-Prinzip arbeitet, und als Hubkolbenpumpe mit einem Förderkolbenelement (44) ausgebildet ist, das aus seiner Ausgangsstellung in Richtung zu einer Druckkammer (66) bewegt wird, wobei es während einer nahezu widerstandslosen Beschleunigungsphase kinetische Energie speichert, die durch eine Stoßbewegung schlagartig auf in der Druckkammer (66) befindlichen Kraftstoff übertragen wird, so daß ein Druckstoß zum Abspritzen von Kraftstoff durch eine Einspritzdüseneinrichtung erzeugt wird,
dadurch **gekennzeichnet**,
daß eine zweite Druckkammer (66') auf der der ersten Druckkammer (66) gegenüberliegenden Seite des Förderkolbenelements (44) derart angeordnet ist, daß die bei der Zurückbewegung des Förderkolbenelements (44) in seine Ausgangsstellung aufgenommene kinetische Energie auf einen in der zweiten Druckkammer (66') befindlichen Kraftstoff übertragen wird.

2. Kraftstoff-Einspritzvorrichtung nach Anspruch 1,
dadurch gekennzeichnet,
daß die kinetische Energie bei der Zurückbewegung in die Ausgangsstellung während einer nahezu widerstandslosen Beschleunigungsphase gespeichert wird, und daß die gespeicherte kinetische Energie durch eine Rückstoßbewegung schlagartig auf den in der zweiten Druckkammer (66') befindlichen Kraftstoff übertragen wird.

3. Kraftstoff-Einspritzvorrichtung nach Anspruch 1 oder 2,
dadurch gekennzeichnet,
daß das die widerstandslose Beschleunigungsphase unterbrechende und den Druckstoß in der ersten Druckkammer (66) erzeugende Mittel ein Ventil ist, das einen Ventilkörper (50) und einen am Förderkolbenelement (44) ausgebildeten Ventilsitz (57) umfaßt und zum Erzeugen des Druckstoßes die erste Druckkammer (66) schließt, wobei der Ventilsitz (57) und der Ventilkörper (50) an dem in Stoßrichtung vorne liegenden Ende (45) des Förderkolbenelements (44) angeordnet sind, so daß die Druckkammer (66) räumlich getrennt vom Förderkolbenelement (44) ausgebildet ist.

4. Kraftstoff-Einspritzvorrichtung nach Anspruch 2 oder Anspruch 2 und Anspruch 3,
dadurch gekennzeichnet,
daß das die widerstandslose Beschleunigungsphase unterbrechende und den Druckstoß in der zweiten Druckkammer (66') erzeugende Mittel ein Ventil ist, das einen Ventilkörper (50') und einen am Förderkolbenelement ausgebildeten Ventilsitz (57') umfaßt und zum Erzeugen des Druckstoßes die zweite Druckkammer (66') schließt, wobei der Ventilsitz (57') und der Ventilkörper (50') an dem in Rückstoßrichtung vorne liegenden Ende (46) des Förderkolbenelements (44) angeordnet sind, so daß die Druckkammer (66') räumlich getrennt vom Förderkolbenelement (44) ausgebildet ist.

5. Kraftstoff-Einspritzvorrichtung nach einem oder mehreren der Ansprüche 1 bis 4,
dadurch gekennzeichnet,
daß die Kraftstoff-Einspritzvorrichtung als elektromagnetisch betätigte Hubkolbenpumpe (1) mit einer Magnetspule (102) und dem von der Spule (102) angetriebenen Förderkolbenelement (44) ausgebildet ist, wobei das Förderkolbenelement (44) einen etwa zylinderförmigen Anker (24) und ein langgestrecktes Förderkolbenrohr (35) aufweist, wobei sich die Enden (45, 46) des Förderkolbenrohres (35) in Längsrichtung über den Anker (24) hinaus erstrecken und jeweils formschlüssig und in Längsachsrichtung verschiebbar in Ausnehmungen gelagert sind.

6. Kraftstoff-Einspritzvorrichtung nach Anspruch 5,
dadurch gekennzeichnet,
daß das Förderkolbenrohr (35) kraftsschlüssig mit dem Anker (24) verbunden ist, wobei an den Enden (45, 46) des Förderkolbenrohrs (35) jeweils einer der Ventilsitze (57, 57') angeordnet ist.

7. Kraftstoff-Einspritzvorrichtung nach Anspruch 3 und 4 oder Anspruch 3 und 4 und Anpruch 5 und/oder 6,
dadurch gekennzeichnet,
daß der oder die Ventilkörper (50 bzw. 50') jeweils einen langgestreckten im wesentlichen zylinderförmigen Vollkörper bilden, der in einem Führungsrohr (40, 40') axial verschiebbar gelagert ist, wobei er an seinem Umfang mit in Längsrichtung verlaufenden Nuten (55 bzw. 55') versehen ist, die einen Durchgang von einer der Druckkammern (66 bzw. 66') in einen Durchgangsraum (36) innerhalb des Förderkolbenrohres (35) bilden, wobei der Durchgang versperrt ist, wenn einer der Ventilsitze (57, 57') am jeweiligen Ventilkörper (50 bzw. 50') anliegt, wodurch die entsprechende Druckkammer (66 bzw. 66') geschlossen ist.

8. Kraftstoff-Einspritzvorrichtung nach Anspruch 3 und 4 oder Anspruch 3 und 4 und/oder 6,
dadurch gekennzeichnet,
daß der oder die Ventilkörper eine oder zwei Kugeln (50a, 50a') sind, wobei Kugelsitze (41a, 41a') vorgesehen sind, die für die Kugeln (50a, 50a') ein Widerlager bilden, so daß sie nicht weiter nach innen verschoben werden können, und die Kugelsitze (41a, 41a') jeweils mindestens eine Nut 41b, 41b' aufweisen, die einen Durchgang von einer der Druckkammern (66 bzw. 66') in einen Durchgangsraum (36) innerhalb des Förderkolbenrohres (35) bilden, wobei der Durchgang versperrt ist, wenn einer der Ventilsitze (57, 57') am jeweiligen Ventilkörper (50 bzw. 50') anliegt, wodurch die entsprechende Druckkammer (66 bzw. 66') geschlossen ist.

9. Kraftstoff-Einspritzvorrichtung nach einem oder mehreren der Ansprüche 5 bis 8,
dadurch gekennzeichnet,
daß der etwa zylinderförmige Anker (24) eine in Stoßrichtung vordere und hintere Stirnfläche (28, 29) und eine Mantelfläche (30) aufweist, und eine von der hinteren Stirnfläche (28) bis etwa zur Längsmitte des Ankers (24) von hinten nach vorne außen verlaufende Kegelfläche (31) aufweist.

10. Kraftstoff-Einspritzvorrichtung nach einem oder mehreren der Ansprüche 5 bis 9,
dadurch gekennzeichnet,
daß die Hubkolbenpumpe (1) ein Pumpengehäuse mit einer Ankerbohrung (16) aufweist, in der ein Ankerraum (23) durch die Ankerbohrung (16) in Stoßrichtung nach vorne durch eine erste Ringstufe (21) und in Stoßrichtung nach hinten durch eine zweite Ringstufe (22) begrenzt ist, in dem der Anker (24) durch eine Magnetspule (102) und eine in Längsachsrichtung den Anker (24) beaufschlagende Ankerfeder (38) hin- und herbewegt wird, wobei der Anker (24) an seinem Mantelbereich mit einer in Längsachsrichtung verlaufenden Nut (32) ausgebildet ist.

11. Kraftstoff-Einspritzvorrichtung nach Anspruch 10,
dadurch gekennzeichnet,
daß der Anker (24) seine Ausgangsstellung durch die Federwirkung der Ankerfeder (38) einnimmt, wenn die Spule (102) stromlos geschaltet ist, wobei der in Richtung zur ersten Ventilkammer (66) gerichtete Ventilsitz (57) mit Abstand (s_{V}) zu einer korrespondierenden Stirnwandung (52) angeordnet ist, und der in Richtung zur zweiten Druckkammer (66') angeordnete Ventilsitz (57') an der korrespondierenden Stirnfläche (52') des entsprechenden Ventilkörpers (50') anliegt, so daß dieser etwas in die Druckkammer (66') gedrückt ist.

12. Kraftstoff-Einspritzvorrichtung nach Anspruch 11,
dadurch gekennzeichnet,
daß das Hubkolbenelement (44) eine Bohrung (33a) aufweist, die den Durchgangsraum (36) innerhalb des Förderkolbenrohres (35) mit dem Ankerraum (23) verbindet, und daß der Ankerraum (23) über nach außen führende Bohrung (90) und einen Anschlußstutzen (91) mit einer Kraftstoff-Rücklaufleitung (92) verbunden ist.

13. Kraftstoff-Einspritzvorrichtung nach einem oder mehreren der Ansprüche 1 bis 12,
dadurch gekennzeichnet,
daß die Druckkammern (66, 66') durch jeweils ein Standdruckventil (74, 74') begrenzt sind, das sich ab einem vorbestimmten Druck öffnet und den Durchgang in eine Kraftstofförderleitung (72) zu einer Einspritzdüse (2) freimacht.

14. Kraftstoff-Einspritzvorrichtung nach einem oder mehreren der Ansprüche 1 bis 13,
dadurch gekennzeichnet,
daß die erste und/oder zweite Druckkammer (66 bzw. 66') nur geringfügig größer ist, als der beim Einspritzvorgang ausgeführten Stoßbewegung des vom jeweiligen Ventilkörper (50, 50') beanspruchten Raumes.

15. Verwendung einer Kraftstoff-Einspritzvorrichtung nach einem oder mehreren der Ansprüche 1 bis 14 zur Ladungsschichtung in einem Ottomotor, bei dem der Kraftstoff mit hohem Druck, vorzugsweise über 40 bar, in einen Brennraum eingespritzt wird, wobei eine erste lastabhängig variierende Kraftstoffhauptmenge zu einem frühen Zeitpunkt in den Brennraum eingespritzt wird und eine Kraftstoffzündmenge in denselben Brennraum zu einem späten Zeitpunkt in einen Bereich der Zündstelle der Zündkerze eingespritzt und gezündet wird.

16. Verwendung nach Anspruch 15,
**dadurch gekennzeichnet**,
daß die kinetische Energie bei der Zurückbewegung in die Ausgangsstellung während einer nahezu widerstandslosen Beschleunigungsphase gespeichert wird, und daß die gespeicherte kinetische Energie durch eine Rückstoßbewegung schlagartig auf den in der zweiten Druckkammer (66') befindlichen Kraftstoff übertragen wird.

17. Verwendung nach Anspruch 15 und/oder 16,
**dadurch gekennzeichnet**,
daß der Zeitabstand zwischen dem frühen und dem späten Zeitpunkt so bemessen ist, daß sich die Kraftstoffhauptmenge mit einer angesaugten Luftmenge auf ein mageres Gemischverhältnis von λ > 1,5 vermischt.

18. Verwendung nach Anspruch 17,
**dadurch gekennzeichnet**,
daß der Zeitabstand zwischen dem frühen und dem späten Zeitpunkt proportional zur Kraftstoffhauptmenge gesteuert wird.

19. Verwendung nach einem oder mehreren der Ansprüche 15 bis 18,
**dadurch gekennzeichnet**,
daß der Druck beim Einspritzen des Kraftstoffes etwa im Bereich von 60 bar liegt.

20. Verwendung nach einem oder mehreren der Ansprüche 15 bis 19,
**dadurch gekennzeichnet**,
daß die Kraftstoffhauptmenge bei voller Motorlast etwa das 10fache der Kraftstoffzündmenge beträgt.

21. Verwendung nach einem oder mehreren der Ansprüche 15 bis 20,
**dadurch gekennzeichnet**,
daß im Leerlauf keine Kraftstoffhauptmenge eingespritzt wird.

22. Verwendung nach einem oder mehreren der Ansprüche 15 bis 21,
**dadurch gekennzeichnet**,
daß eine im wesentlichen konstante Kraftstoffzündmenge eingespritzt wird.

23. Verwendung nach einem der Ansprüche 15 bis 22,
**dadurch gekennzeichnet**,
daß die aus der ersten Druckkammer geförderte Kraftstoffhauptmenge in Abhängigkeit von der durch das Hubkolbenelement zurückgelegten Strecke während der Stoßbewegung gesteuert wird.

24. Verwendung nach einem oder mehreren der Ansprüche 15 bis 23,
**dadurch gekennzeichnet**,
daß die aus der zweiten Druckkammer geförderte Kraftstoffzündmenge konstant ist und daß die Kraftstoffzündmenge beim Einspritzen in eine Brennkammer des Motors gezündet wird.

25. Verwendung nach einem oder mehreren der Ansprüche 15 bis 24,
**dadurch gekennzeichnet**,
daß das Hubkolbenelement mittels einer Magnetspule betätigt wird und daß die erste Kraftstoffmenge über die Zeitdauer eines zur Erregung der Spule angelegten Strompulses qesteuert wird.

26. Verwendung nach einem oder mehreren der Ansprüche 15 bis 25,
**dadurch gekennzeichnet**,
daß die Kraftstoffzündmenge etwa dem Bedarf im Leerlaufbetrieb entspricht und die Kraftstoffhauptmenge zu einem Zeitpunkt eingespritzt wird, der der Kurbelwellenstellung 60° oder mehr vor dem oberen Totpunkt (OT) entspricht.

## Claims

1. Fuel injection device operating on the solid body energy storage principle and formed as a reciprocating piston pump with a delivery piston element (44), which is moved from its starting position in the direction towards a pressure chamber (66), whereby during a virtually resistance-free acceleration phase it accumulates kinetic energy which, as the result of an impulse movement, is transferred abruptly to the fuel present in the pressure chamber (66), so that a pressure surge is produced which injects fuel through an injection nozzle device,
**characterised in that**
a second pressure chamber (66') is arranged on the side of the delivery piston element (44) opposite the first pressure chamber (66) such that the kinetic energy accumulated as the delivery piston element (44) moves back to its starting position is transferred to the fuel present in the second pressure chamber (66').

2. Fuel injection device according to Claim 1,
**characterised in that**
the kinetic energy is accumulated during the movement back to the starting position in a virtually resistance-free acceleration phase, and the stored kinetic energy is abruptly transferred by virtue of a reverse impulse movement to the fuel present in the second pressure chamber (66').

3. Fuel injection device according to Claims 1 or 2,
**characterised in that**
the means whereby the resistance-free acceleration phase is interrupted and the pressure surge is produced in the first pressure chamber (66) is a valve comprising a valve body (50) and a valve seat (57) formed on the delivery piston element (44), which closes the first pressure chamber (66) in order to produce the pressure surge, the valve seat (57) and the valve body (50) being located at the front end (45) of the delivery piston element (44) in the impulse direction, so that the pressure chamber (66) is spatially separated from the delivery piston element (44).

4. Fuel injection device according to Claim 2 or Claims 2 and 3,
**characterised in that**
the means whereby the resistance-free acceleration phase is interrupted and the pressure surge is produced in the second pressure chamber is a valve comprising a valve body (50') and a valve seat (57') formed on the delivery piston element, which closes the second pressure chamber (66') in order to produce the pressure surge, the valve seat (57') and the valve body (50') being located at the front end (46) of the delivery piston element (44) in the reverse impulse direction, so that the pressure chamber (66') is spatially separated from the delivery piston element (44).

5. Fuel injection device according to one or more of Claims 1 to 4,
**characterised in that**
the fuel injection device is formed as an electromagnetically actuated reciprocating piston pump (1) with a magnetic solenoid (102) and a delivery piston element (44) driven by the solenoid (102), the delivery piston element (44) comprising an approximately cylindrical armature (24) and a longitudinally extending delivery piston barrel (35), such that the ends (45, 46) of the delivery piston barrel (35) extend beyond the armature (24) in the longitudinal direction and are each held in recesses by positive form interlock such that they can be displaced in the direction of the longitudinal axis.

6. Fuel injection device according to Claim 5,
**characterised in that**
the delivery piston barrel (35) is connected to the armature (24) by friction force locking, and one of the valve seats (57, 57') is located at each end (45, 46) of the delivery piston barrel (35).

7. Fuel injection device according to Claims 3 and 4 or Claims 3 and 4 and Claims 5 and/or 6,
**characterised in that**
the valve body or bodies (50 or 50') are each formed as a longitudinally extending and essentially cylindrical solid body accommodated and axially movable within a guide tube (40, 40') and are provided at their circumference with grooves (55 or 55') extending longitudinally, which form a passage from one of the pressure chambers (66 or 66' respectively) into a communication space (36) inside the delivery piston barrel (35), so that the said passage is blocked when one of the valve seats (57, 57') is in contact with its associated valve body (50, 50') such that the corresponding pressure chamber (66 or 66') is closed.

8. Fuel injection device according to Claims 3 and 4 or Claims 3 and 4 and/or 6,
**characterised in that**
the valve body or bodies consist of one or two balls (50a, 50a'), and ball seats (41a, 41a') are provided which form abutments for the balls (50a, 50a') so that they cannot move any further inwards, and the ball seats (41a, 41a') are each provided with at least one groove (41b, 41b') which forms a passage from one of the pressure chambers (66 or 66') into a communication space (36) inside the delivery piston barrel (35), so that the passage is blocked when one of the valve seats (57, 57) is in contact with its associated valve body (50, 50') such that the corresponding pressure chamber (66, 66' is closed.

9. Fuel injection device according to one or more of Claims 5 to 8,
**characterised in that**
the approximately cylindrical armature (24) has front and back end-faces (28, 29) in the impulse direction and an outer shell surface (30), and comprises a conical surface (31) extending and widening out from the back end-face (28) to approximately the middle of the armature (24).

10. Fuel injection device according to one or more of Claims 5 to 9,
characterised in that
the reciprocating piston pump (1) comprises a pump housing with an armature bore (16) within which an armature space (23) is delimited in the armature bore (16) at the front in the impulse direction by a first annular step (21) and at the back in the impulse direction by a second annular step (22), and within the said space the armature (24) can be moved back and forth by a magnetic solenoid (102) and an armature spring (38) acting on the armature (24) in the longitudinal direction, and in its outer shell area the armature (24) is provided with a groove (32) extending in the longitudinal direction.

11. Fuel injection device according to Claim 10,
**characterised in that**
the armature (24) is pushed to its starting position by the spring action of the armature spring (38) when there is no current passing through the solenoid (102), such that the valve seat (57) directed towards the first pressure chamber (66) is positioned a certain distance (sᵥ) away from a corresponding end wall (52), and the valve seat (57) directed towards the second pressure chamber (66') is in contact with the corresponding end-face (52') of the corresponding valve body (50'), so that this is somewhat pressed into the pressure chamber (66').

12. Fuel injection device according to Claim 11,
**characterised in that**
the reciprocating piston pump element (44) comprises a bore (33a) which connects the communication space (36) within the delivery piston barrel (35) to the armature space (23), and the armature space (23) is connected via an outwards-directed hole (90) and a connection pipe (91) to a fuel return line (92).

13. Fuel injection device according to one or more of Claims 1 to 12,
**characterised in that**
the pressure chambers (66, 66') are each delimited by respective static pressure valves (74, 74') which open above a predetermined pressure and clear the passage in a fuel delivery line (72) to an injection nozzle (2).

14. Fuel injection device according to one or more of Claims 1 to 13,
**characterised in that**
the first and/or second pressure chamber (66 or 66') is only slightly larger than the volume required by the corresponding valve body (50, 55') when undergoing its stroke movement during the injection process.

15. Use of a fuel injection device according to one or more of Claims 1 to 14, for charge stratification in an Otto engine, in which the fuel is injected into a combustion chamber at high pressure, preferably more than 40 bar, such that a first, main quantity of fuel which varies according to the engine load is injected into the combustion chamber at an earlier point in time and a quantity of fuel for ignition is injected into the same combustion chamber at a later point in time in the area of the spark plug ignition point so as to be ignited.

16. Use according to Claim 15,
**characterised in that**
kinetic energy is stored during the return movement to the starting position in a virtually resistance-free acceleration phase, and the stored kinetic energy is transferred abruptly to the fuel present in the second pressure chamber (66') by a reverse impulse movement.

17. Use according to Claims 15 and/or 16,
**characterised in that**
the time interval between the said earlier and later points in time is chosen so that the main quantity of fuel is mixed with a quantity of air drawn in such that a lean mix ratio of λ > 1.5 is formed.

18. Use according to Claim 17,
**characterised in that**
the time interval between the earlier and later points in time is controlled to be proportional to the main quantity of fuel.

19. Use according to one or more of Claims 15 to 18,
**characterised in that**
the fuel injection pressure is approximately in the range of 60 bar.

20. Use according to one or more of Claims 15 to 19,
**characterised in that**
when the engine is under full load, the main quantity of fuel is approximately 10 times the ignition quantity of fuel.

21. Use according to one or more of Claims 15 to 20,
**characterised in that**
when the engine is idling, no main quantity of fuel is injected.

22. Use according to one or more of Claims 15 to 21,
**characterised in that**
an essentially constant ignition quantity of fuel is injected.

23. Use according to any of Claims 15 to 22,
**characterised in that**
the main quantity of fuel delivered from the first pressure chamber is controlled as a function of the path covered by the reciprocating piston element during its impulse movement.

24. Use according to one or more of Claims 15 to 23,
**characterised in that**
the ignition quantity of fuel delivered from the second pressure chamber is constant, and the said ignition quantity of fuel is ignited when injected into a combustion chamber of the engine.

25. Use according to one or more of Claims 15 to 24,
**characterised in that**
the reciprocating piston element is actuated by a magnetic solenoid and the first quantity of fuel is controlled over the time duration of a current pulse applied to energise the solenoid.

26. Use according to one or more of Claims 15 to 25,
**characterised in that**
the ignition quantity of fuel corresponds approximately to the engine's fuel demand during idling, and the main quantity of fuel is injected at a point in time which corresponds to a crankshaft position 60E or more ahead of top dead centre (TDC).

## Revendications

1. Dispositif d'injection de carburant, qui fonctionne selon le principe de l'accumulateur d'énergie dans un corps solide, et qui est configuré comme une pompe à piston alternatif comportant un élément de piston d'alimentation (44), lequel, à partir de sa position de départ, est déplacé dans la direction allant vers une chambre de compression (66), en accumulant, pendant une phase d'accélération, sensiblement sans résistance, une énergie cinétique qui, sous l'effet d'un mouvement de choc, est brusquement transmise au carburant se trouvant dans la chambre de compression (66), de façon à produire un coup de bélier destiné à injecter le carburant à l'aide d'un dispositif d'injecteurs, caractérisé en ce qu'une deuxième chambre de compression (66') est disposée sur le côté de l'élément de piston d'alimentation (44) opposé à la première chambre de compression (66), de façon que l'énergie cinétique, absorbée lors du mouvement de retour de l'élément de piston d'alimentation (44) dans sa position de départ soit transmise à un carburant se trouvant dans la deuxième chambre de compression (66').

2. Dispositif d'injection de carburant selon la revendication 1,
caractérisé en ce que l'énergie cinétique est, lors du mouvement de retour dans la position de départ, accumulée pendant une phase d'accélération sensiblement sans résistance, et que l'énergie cinétique accumulée est, sous l'effet d'un contrecoup, transmise brusquement au carburant se trouvant dans la deuxième chambre de compression (66').

3. Dispositif d'injection de carburant selon la revendication 1 ou 2,
caractérisé en ce que l'organe qui interrompt la phase d'accélération sans résistance et qui produit le coup de bélier dans la première chambre de compression (66) est une soupape qui comporte un corps de soupape (50) et un siège de soupape (57) réalisé contre l'élément de piston d'alimentation (44), et qui, pour produire le coup de bélier, obture la première chambre de compression (66), le siège de soupape (57) et le corps de soupape (58) étant disposés contre l'extrémité (45) de l'élément de piston d'alimentation (44) située en avant dans la direction du coup, de façon que la chambre de compression (66) soit configurée en étant spatialement séparée de l'élément de piston d'alimentation (44).

4. Dispositif d'injection de carburant selon la revendication 2, ou la revendication 2 et la revendication 3,
caractérisé en ce que l'organe qui interrompt la phase d'accélération sans résistance et qui produit le coup de bélier dans la deuxième chambre de compression (66') est une soupape qui comporte un corps de soupape (50') et un siège de soupape (57'), réalisé contre l'élément de piston d'alimentation, et qui, pour produire le coup de bélier, obture la deuxième chambre de compression (66'), le siège de soupape (57')et le corps de soupape (50') étant disposés, contre l'extrémité (46) de l'élément de piston d'alimentation (44) disposée vers l'avant dans la direction du contrecoup, de façon que la chambre de compression (66') soit configurée en étant spatialement séparée de l'élément de piston d'alimentation (44).

5. Dispositif d'injection de carburant selon l'une ou plusieurs des revendications 1 à 4,
caractérisé en ce que le dispositif d'injection de carburant est configuré comme une pompe à piston alternatif (1), à manoeuvre électromagnétique, comportant une bobine magnétique (102) et l'élément de piston d'alimentation (44) entraîné par la bobine (102), l'élément de piston d'alimentation (44) comportant un induit (24) approximativement cylindrique, et un tube de piston d'alimentation (35), de grande longueur, les extrémités (45, 46) du tube (35) du piston d'alimentation s'étendant dans la direction longitudinale au-delà de l'induit (24) et étant chacune logée dans des évidements, en étant bloquées par une liaison avec correspondance de forme, et en pouvant coulisser dans la direction de l'axe longitudinal.

6. Dispositif d'injection de carburant selon la revendication 5,
caractérisé en ce que le tube (35) de piston d'alimentation est relié à l'induit (24) par une liaison dynamique, l'un des sièges de soupape (57, 57') étant disposé contre chacune des extrémités (45, 46) du tube (35) de piston d'alimentation.

7. Dispositif d'injection de carburant selon les revendications 3 et 4 ou les revendications 3 et 4 et la revendication 5 et/ou 6,
caractérisé en ce que le corps de soupape ou chacun des corps de soupape (50 ou 50') forment un corps plein, de grande longueur, essentiellement cylindrique, qui est logé de façon à pouvoir subir un coulissement axial dans un tube de guidage (40,40'), en étant pourvu sur sa circonférence de rainures (55 ou 55') courant dans la direction longitudinale, rainures qui forment un passage allant de l'une des chambres de compression (66 ou 66') à un sas (36) aménagé à l'intérieur du tube (35) de piston d'alimentation, le passage étant bloqué quand l'un des sièges de soupape (57, 57') s'appuie contre le corps de soupape correspondant (50 ou 50'), ce qui obture la chambre de compression correspondante (66 ou 66').

8. Dispositif d'injection de carburant selon les revendications 3 et 4 ou les revendications 3 et 4 et/ou 6,
caractérisé en ce que le ou les corps de soupape sont constitués d'une ou plusieurs billes (50a, 50a'), des sièges de billes (41a, 41a') étant prévus, qui forment une butée pour les billes (50a, 50a') de façon qu'elles ne puissent pas se déplacer plus loin vers l'intérieur, et chacun des sièges de billes (41a, 41a') comportant au moins une rainure (41b, 41b'), qui forment un passage allant de l'une des chambres de compression (66 ou 66') à un sas (36) aménagé à l'intérieur du tube (35) de piston d'alimentation, le passage étant bloqué quand l'un des sièges de soupape (57, 57') s'appuie contre le corps de soupape correspondant (50 ou 50'), ce qui ferme la chambre de compression correspondante (66 ou 66').

9. Dispositif d'injection de carburant selon l'une ou plusieurs des revendications 5 à 8,
caractérisé en ce que l'induit approximativement cylindrique (24) comporte une face frontale avant et une face frontale arrière (28, 29) quand on regarde dans la direction du choc, ainsi qu'une surface latérale (30), et présente une surface conique (31) qui fuit de l'arrière vers l'avant et vers l'extérieur, en partant de la face frontale arrière (28) pour arriver approximativement au milieu de la longueur de l'induit (24).

10. Dispositif d'injection de carburant selon l'une ou plusieurs des revendications 5 à 9,
caractérisé en ce que la pompe à piston alternatif (1) comporte un corps de pompe muni d'un creux d'induit (16), dans lequel un logement d'induit (23) passant par le creux d'induit (16), est délimité vers l'avant dans la direction du choc, par un premier étagement annulaire (21), et, vers l'arrière quand on regarde dans la direction du choc, par un deuxième étagement annulaire (22), logement d'induit dans lequel l'induit (24) peut se déplacer dans un sens et dans l'autre sous l'effet d'une bobine magnétique (102) et d'un ressort d'induit (38) qui agit dans la direction longitudinale de l'induit (24), l'induit (24) étant, au niveau de sa surface latérale, configuré avec une rainure (32) courant dans la direction de l'axe longitudinal.

11. Dispositif d'injection de carburant selon la revendication 10,
caractérisé en ce que l'induit (24) prend sa position de départ sous l'effet élastique du ressort d'induit (38) quand la bobine (102) est montée sans courant, le siège de soupape (57) dirigé dans la direction de la première chambre de soupape (66) étant disposé à une distance (Sᵥ) par rapport à une paroi en bout correspondante (52), et le siège de soupape (57) disposé dans la direction allant vers la deuxième chambre de compression (66') s'appuie contre la face frontale correspondante (52') du corps de soupape correspondant (50'), de sorte que ce dernier est un peu comprimé dans la chambre de compression (66').

12. Dispositif d'injection de carburant selon la revendication 11,
caractérisé en ce que l'élément de piston alternatif (44) comporte un alésage (33a) qui fait communiquer le sas (36) à l'intérieur du tube (35) de piston d'alimentation, avec le logement d'induit (23), et en ce que le logement d'induit (23) communique, par l'intermédiaire d'un alésage (90) dirigé vers l'extérieur et d'un raccord de canalisation (91), avec une conduite (92) de retour de carburant.

13. Dispositif d'injection de carburant selon l'une ou plusieurs des revendications 1 à 12,
caractérisé en ce que chacune des chambres de compression (66, 66') est délimitée par une soupape à pression statique (74, 74') qui s'ouvre à partir d'une certaine pression prédéfinie, et qui dégage le passage permettant de pénétrer dans une conduite (72) d'alimentation de carburant allant vers un injecteur (2).

14. Dispositif d'injection de carburant selon l'une ou plusieurs des revendications 1 à 13,
caractérisé en ce que la première et/ou la deuxième chambres de compression (66 et 66') ne sont que légèrement plus grandes que le mouvement de choc exercé lors de l'opération d'injection du volume nécessaire au corps de soupape correspondant (50, 50').

15. Utilisation d'un dispositif d'injection de carburant selon l'une ou plusieurs des revendications 1 à 14,
pour assurer la stratification de la charge dans un moteur à allumage commandé, dans lequel le carburant est injecté dans une chambre de combustion sous haute pression, de préférence supérieure à 40 bar, une première quantité principale de carburant, variant en fonction de la charge, étant injectée à un moment avancé dans la chambre de combustion, et une quantité de carburant d'allumage étant injectée et allumée dans cette même chambre de combustion à un instant retardé, au voisinage de la position d'allumage de la bougie d'allumage.

16. Utilisation selon la revendication 15, caractérisée en ce que l'énergie cinétique, lors du mouvement de retour dans la position de départ, est accumulée pendant une phase d'accélération sensiblement sans résistance, et que l'énergie cinétique accumulée est, sous l'effet d'un mouvement de contrecoup, transférée brusquement au carburant se trouvant dans la deuxième chambre de combustion (66').

17. Utilisation selon les revendications 15 et/ou 16, caractérisée en ce que le temps qui s'écoule entre l'instant avancé et l'instant retardé est calculé de façon que la quantité principale de carburant soit mélangée à une quantité d'air aspiré jusqu'à un mélange pauvre présentant un rapport λ > 1,5.

18. Utilisation selon la revendication 17, caractérisée en ce que le temps qui s'écoule entre l'instant avancé et l'instant retardé est commandé proportionnellement à la quantité principale de carburant.

19. Utilisation selon l'une ou plusieurs des revendications 15 à 18,
caractérisée en ce que la pression, lors de l'injection du carburant, est d'environ 60 bar.

20. Utilisation selon l'une ou plusieurs des revendications 15 à 19,
caractérisée en ce que la quantité principale de carburant est, à pleine charge, environ dix fois supérieure à la quantité du carburant d'allumage.

21. Utilisation selon l'une ou plusieurs des revendications 15 à 20,
caractérisée en ce qu'il n'y a pas injection de quantité principale de carburant quand le moteur marche au ralenti.

22. Utilisation selon l'une ou plusieurs des revendications 15 à 21,
caractérisée en ce qu'on injecte une quantité de carburant d'allumage essentiellement constante.

23. Utilisation selon l'une ou plusieurs des revendications 15 à 22,
caractérisée en ce que la quantité principale de carburant refoulée de la première chambre de compression est commandée pendant le mouvement de choc en fonction de la distance parcourue par l'élément de piston alternatif.

24. Utilisation selon l'une ou plusieurs des revendications 15 à 23,
caractérisée en ce que la quantité de carburant d'allumage refoulée de la deuxième chambre de compression est constante, et que la quantité de carburant d'allumage est allumée lorsqu'elle est injectée dans une chambre de combustion du moteur.

25. Utilisation selon l'une ou plusieurs des revendications 15 à 24,
caractérisée en ce que l'élément de piston alternatif est manoeuvré à l'aide d'une bobine magnétique, et que la première quantité de carburant est commandée par la durée d'une impulsion de courant appliquée pour exciter la bobine.

26. Utilisation selon l'une ou plusieurs des revendications 15 à 25,
caractérisée en ce que la quantité de carburant d'allumage correspond approximativement au besoin en marche au ralenti, et que la quantité principale de carburant est injectée à un instant qui correspond à une position du vilebrequin de 60° ou plus en avant du point mort haut (PMH).
